(19) Europäisches Patentamt
European Patent Office
Office européen des brevets

(11) **EP 1 421 293 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**04.11.2015 Patentblatt 2015/45**

(45) Hinweis auf die Patenterteilung:
**22.06.2011 Patentblatt 2011/25**

(21) Anmeldenummer: **02740501.8**

(22) Anmeldetag: **24.04.2002**

(51) Int Cl.:
*B60T 13/74* (2006.01)     *B60T 17/22* (2006.01)
*F16D 65/66* (2006.01)

(86) Internationale Anmeldenummer:
**PCT/EP2002/004522**

(87) Internationale Veröffentlichungsnummer:
**WO 2003/016745 (27.02.2003 Gazette 2003/09)**

(54) **ZUSPANNEINRICHTUNG FÜR EINE BREMSE**

ACTUATING DEVICE FOR A BRAKE

DISPOSITIF DE SERRAGE D'UN FREIN

(84) Benannte Vertragsstaaten:
**AT BE CH CY DE DK ES FI FR GB GR IE IT LI LU MC NL PT SE TR**

(30) Priorität: **16.08.2001 DE 10140078**
**21.08.2001 DE 10140953**
**15.12.2001 DE 10161762**
**21.12.2001 DE 10163053**

(43) Veröffentlichungstag der Anmeldung:
**26.05.2004 Patentblatt 2004/22**

(73) Patentinhaber: **WABCO GmbH**
**30453 Hannover (DE)**

(72) Erfinder:
• **FÖRSTER, Henning**
**31171 Nordstemmen (DE)**
• **GROETZINGER, Thomas**
**30989 Gehrden (DE)**
• **GRADERT, Detlef**
**29336 Nienhagen (DE)**
• **BEIER, Peter**
**31515 Wunstorf (DE)**

(56) Entgegenhaltungen:
EP-A- 0 644 358     EP-A2- 0 146 750
EP-B1- 0 553 450     EP-B1- 0 738 643
WO-A-01/44677     DE-A1- 2 916 475
US-A- 1 727 742     US-A- 1 760 624

EP 1 421 293 B2

**Beschreibung**

Die Erfindung betrifft eine Zuspanneinrichtung für eine Bremse gemäß dem Oberbegriff des Patentanspruchs 1.

Eine gattungsgemäße Zuspanneinrichtung ist aus der internationalen Patentanmeldung WO 01/44677 A1 bekannt.

Bei der bekannten Zuspanneinrichtung werden die Reibelemente einer Bremse über einen Hebel zugespannt. Ein an einer variierbaren Stelle des Hebels angreifender, eine vorgespannte Feder aufweisender Krafterzeuger kann durch eine Variation des Krafteinwirkungspunkts eine einstellbare Kraft auf den Hebel und damit auf die Bremsbeläge ausüben. Die Einwirkposition des Krafterzeugers kann dabei über einen Stellmotor, z. B. einen Elektromotor, verstellt werden. Vorteil dieser Konstruktion ist eine im Vergleich zu einer direkten elektromotorischen Zuspannung erheblich verringerte Leistungsaufnahme des Elektromotors bei gleichzeitig relativ schneller Zuspannung und demzufolge auch ein verringerter Energiebedarf pro Bremsung. Der wesentliche Teil der zum Lösen der Bremse und dem damit einhergehenden erneuten Spannen der Feder des Krafterzeugers erforderlichen Energie wird dabei aus der in den Bremsbelägen und weiteren Teilen der Bremse infolge elastischer Verformung gespeicherten Energie entnommen.

Die bekannte Zuspanneinrichtung weist bereits einen hohen Wirkungsgrad hinsichtlich Leistungsaufnahme und Energieverbrauch sowie eine günstige Zuspanncharakteristik auf. Der Erfindung liegt die Aufgabe zugrunde, eine alternative Zuspanneinrichtung für eine Bremse anzugeben, die ebenfalls eine erhebliche Reduzierung des Leistungs- und Energiebedarfs gegenüber direkt zuspannenden Einrichtungen erlaubt.

Diese Aufgabe wird durch die in dem Patentanspruch 1 angegebene Erfindung gelöst. Weiterbildungen und vorteilhafte Ausgestaltungen der Erfindung sind in den Unteransprüchen angegeben.

Die Erfindung hat den Vorteil, daß eine sichere und zuverlässige Funktion der Zuspanneinrichtung in einem weiten Bereich des Einwirkwinkels gewährleistet ist.

Gemäß der Erfindung sind Mittel zur Veränderung des Einwirkwinkels in Abhängigkeit der Eingangsgröße vorgesehen, derart, daß die Ausgangskraft mittels einer Einstellung des Einwirkwinkels auf einen gewünschten Wert einstellbar ist. Dies hat den Vorteil, daß der Kraftübertragungspunkt auf den Hebel konstant gehalten werden kann, da die Variation der Ausgangskraft nun mittels einer Veränderung des Einwirkwinkels des Krafterzeugers auf den Hebel einstellbar ist. Hierdurch kann der Hebel und das die Hebelkonstruktion umgebende Gehäuse kompakt gehalten werden. Ein weiterer Vorteil ist, daß eine gegenseitige Unterstützung der Krafteinwirkungen des Krafterzeugers und einer von der Eingangsgröße abgeleiteten Eingangskraft zur Erzeugung der Zuspannkraft realisierbar ist.

In einer vorteilhaften Weiterbildung der Erfindung wirkt die von einer Eingangsgrößen/Kraft-Umsetzeinrichtung erzeugte Eingangskraft für die Zuspanneinrichtung unterstützend zu der von dem Krafterzeuger auf den Hebel in Zuspannrichtung ausgeübten Kraft, sodaß die als Zuspannkraft auf die Bremsbeläge einwirkende resultierende Kraft vergrößert wird. Hierdurch wird eine weitere Verbesserung des Wirkungsgrades erzielt. Außerdem kann der Krafterzeuger um dasjenige Maß kleiner ausgelegt werden, das von der Eingangsgrößen/Kraft-Umsetzeinrichtung beigesteuert wird.

Ein weiterer, erheblicher Vorteil dieser Ausgestaltung der Erfindung besteht darin, daß bei einem Defekt an dem Krafterzeuger, der zu einer an sich unerwünschten Minderung des von dem Krafterzeuger beigesteuerten Kraftanteils führen kann, mittels des von der Eingangsgrößen/Kraft-Umsetzeinrichtung abgegebenen Kraftanteils eine Art Notbetrieb für die Bremsanlage aufrechterhalten werden kann. Es sind dann weiterhin Abbremsungen des Fahrzeuges möglich, jedoch mit einer im Vergleich zur normalerweise möglichen maximalen Zuspannkraft verminderten Zuspannkraft und damit einer verminderten Verzögerung. Durch den Notbetrieb kann eine Verbesserung der Betriebssicherheit der Bremsanlage herbeigeführt werden. Des weiteren trägt eine derartige Ausgestaltung zu einer Verbesserung der Akzeptanz rein elektromechanischer, elektronisch gesteuerter Bremsanlagen (brake-by-wire) bei.

Gemäß vorteilhafter Weiterbildungen der Erfindung wirkt die Eingangsgrößen/Kraft-Umsetzeinrichtung über eine Einrichtung zur Veränderung der Winkellage des Hebels auf den Hebel ein. In vorteilhafter Weise ist die Einrichtung zur Veränderung der Winkellage des Hebels zudem ein Bestandteil der Mittel zur Veränderung des Einwirkwinkels. Hierdurch ist die gesamte Konstruktion, nämlich Zuspanneinrichtung und Eingangsgrößen/Kraft-Umsetzeinrichtung mit besonders wenigen Bauteilen herstellbar und läßt sich somit besonders kompakt und gewichtsparend ausführen. Dies ist auch insbesondere im Hinblick auf eine erwünschte Reduzierung der ungefederten Massen eines Fahrzeugs von Bedeutung, durch welche eine Verbesserung des Fahrkomforts erzielbar ist. Ein weiterer Vorteil ist die vereinfachte Montage und die geringere Ausfallwahrscheinlichkeit infolge der geringen Anzahl der notwendigen Bauteile.

Als eine bevorzugte Ausgestaltung der Mittel zur Veränderung der Winkellage des Hebels seien eine Kombination aus einem Zahnrad und einem mit dem Zahnrad in Eingriff stehenden, einer gekrümmten Zahnstange ähnlichen Zahnkranzsektor, welcher mit dem Hebel fest verbunden ist, genannt. Es ist auch möglich, eine Reibrad-Konstruktion oder eine gelenkig mit dem Hebel verbundene Gewindespindel einzusetzen.

In einer vorteilhaften Weiterbildung der Erfindung ist der Hebel bei Ausfall der Eingangsgröße bzw. der Eingangskraft in eine definierte Winkelposition bewegbar. Hierdurch kann ein anhaltendes Bremsen bzw. ein Festbremsen im Stillstand vermieden werden, wenn aus irgendeinem Grund eine Zurücknahme der Ausgangskraft mittels einer Steuerung der Eingangsgröße oder der Eingangskraft nicht durchführbar sein sollte. In besonders vorteilhafter Weise kann dies durch eine bestimmte Ausgestaltung der Kontur in dem Krafterzeuger realisiert werden, wie nachfolgend noch näher ausgeführt. Insbesondere ist eine selbstlösende Charakteristik der Bremse realisierbar.

In einer weiteren vorteilhaften Ausgestaltung der Erfindung ist der Hebel mittels der von dem Krafterzeuger darauf ausgeübten Kraft auch ohne Wirkung der Eingangskraft in eine definierte Endposition bewegbar. Dies hat den Vorteil, insbesondere in Verbindung mit einem mechanischen Anschlag, durch den eine definierte Endposition festgelegt ist, daß auch ohne Kenntnis der aktuellen Zuspannposition bzw. der Hebelstellung und ohne besondere Steuermaßnahmen für die Eingangsgröße eine definierte mechanische und damit auch bezüglich der Steuerlogik für die Eingangsgröße definierte logische Endposition einstellbar ist. Insbesondere kann in diesem Zustand ein Abgleich zwischen mechanischer Endposition und logischer Endposition vorgenommen werden. Hiermit können beispielsweise zeitlich oder thermisch bedingte Wertebereichsänderungen, z. B. bei der Sensierung des Hebelwinkels, kompensiert werden.

Unter Nennung weiterer Vorteile wird die Erfindung nachfolgend anhand von Ausführungsbeispielen unter Verwendung von Zeichnungen näher erläutert.

Es zeigen

Fig. 1 bis 9    verschiedene Prinzipien mechanischer Einrichtungen zur Abgabe einer Aus- gangskraft in Prinzipdarstellungen und

Fig. 10    eine Darstellung des Wirkprinzips der Zuspanneinrichtung und

Fig. 11 bis 13    ein Ausführungsbeispiel für eine erste Ausführungsform einer elektromechani- schen Bremse in verschiedenen Zuspann- stellungen und

Fig. 14 bis 16    ein Ausführungsbeispiel für eine zweite Ausführungsform einer elektro- mechanischen Bremse in verschiedenen Zuspannstellungen und

Fig. 17    Beispiele für Kennlinien eines die Eingangskraft aufbringenden Motormo- ments über den Zuspannwinkel und

Fig. 18    einen vorteilhaften Verlauf der von dem Krafterzeuger in den Hebel einge- leiteten Momentenanteils über den Zu- spannwinkel und

Fig. 19    bevorzugte Ausführungsformen der Kon- tur des Krafterzeugers und

Fig. 20    bevorzugte Funktionsverläufe $f_{Kontur}$ des Einwirkwinkels und

Fig. 21 und 22    Kennlinien der Zuspannkraft-Anteile und des Motorstroms über den Hebelwin- kel.

In den Figuren werden gleiche Bezugszeichen für einander entsprechende Teile, Signale und andere Größen verwendet.

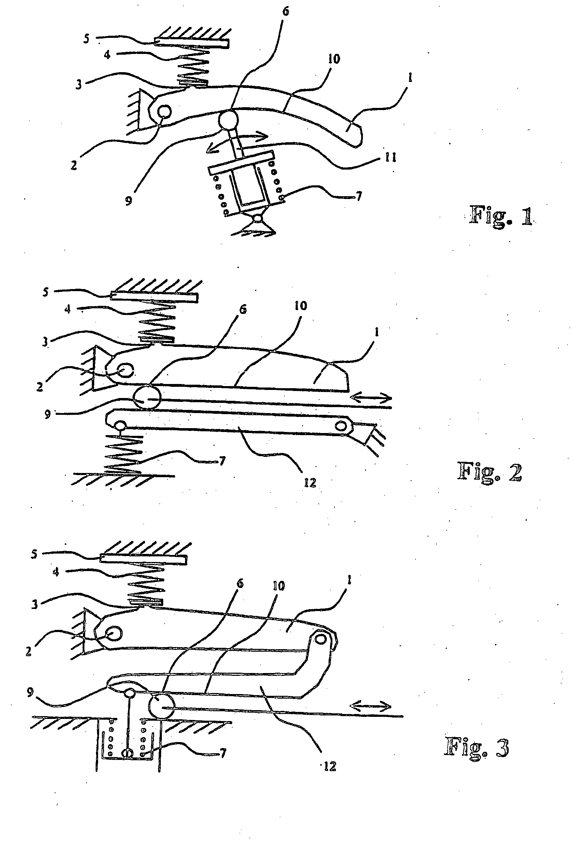

Eine mechanische Einrichtung zur Abgabe einer Ausgangskraft in Abhängigkeit von einer Eingangsgröße, insbesondere einer Eingangskraft, wird in der Technik bevorzugt mittels einer Hebelkonstruktion realisiert. Über die wirksamen Hebellängen kann ein erwünschtes Verhältnis zwischen der Eingangskraft und der Ausgangskraft eingestellt werden. Bekanntlich muß die Summenbilanz der an einem derartigen Hebel wirkenden Drehmomente den Wert Null ergeben, so daß die Ausgangskraft gleich der Eingangskraft ist, multipliziert mit dem Verhältnis aus der Hebelarmlänge, an der die Eingangskraft angreift, geteilt durch die Hebelarmlänge, an der die Ausgangskraft abgenommen wird. Da derartige Hebel in der Regel, wie auch in den Fig. 1 bis 9 dargestellt, an einem Drehpunkt aufgehängt und dort drehbar gelagert werden, werden die Hebellängen in der Regel in Bezug auf diesen Drehpunkt bestimmt.

Zur Variation der Ausgangskraft bestehen folgende Möglichkeiten, die ebenfalls eine erhebliche Reduzierung des Leistungs- und Energiebedarfs gegenüber direkt zuspannenden Einrichtungen erlauben:

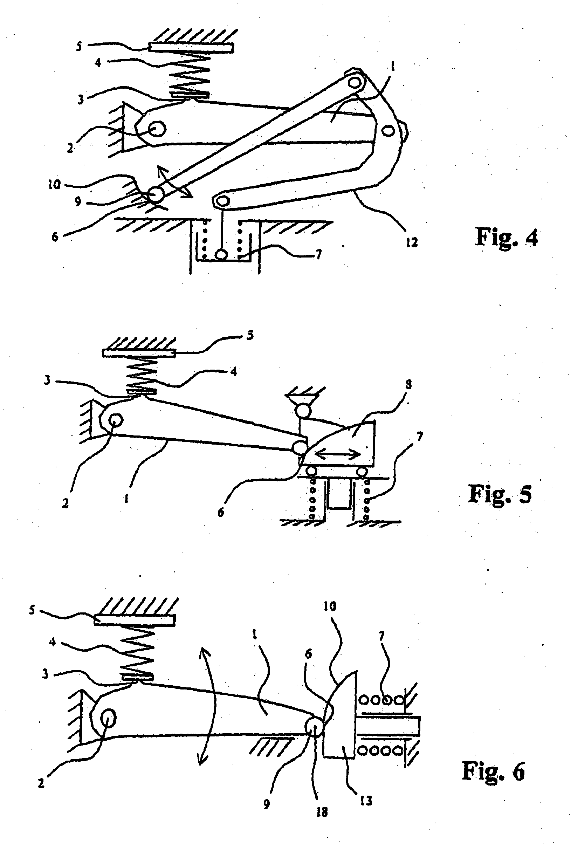

1. Die Eingangskraft wird variiert. Für diese Art der Variation der Ausgangskraft ist ein Beispiel in Fig. 5 angegeben. Ein Hebel (1) ist an einem Drehpunkt (2) befestigt und dort drehbar aufgehängt. An einem Kraftabgabepunkt (3) gibt der Hebel (1) die Ausgangskraft an eine Kraftaufnahmeeinrichtung (4, 5) ab. Die Kraftaufnahmeeinrichtung (4, 5) ist in der lediglich das Prinzip erläuternden, schematischen Darstellung der Fig. 1 bis 9 als eine Feder (4) und ein ortsfester Anschlag (5) dargestellt. An einem Kraftübertragungspunkt (6) wird die Eingangskraft, hier auch die Eingangsgröße bildend, in den Hebel (1) eingeleitet.

Die Eingangskraft wird hierbei von einem Krafterzeuger (7) über einen Kraftmodulations-Mechanismus (8) auf den Kraftübertragungspunkt (6) übertragen. Der Krafterzeuger ist in den Fig. 1 bis 9 vereinfachend als eine vorgespannte Feder dargestellt. Auch andere Ausführungsformen für den Krafterzeuger sind denkbar und vorteilhaft einsetzbar, wie nachfolgend noch erläutert.

Der Kraftmodulations-Mechanismus (8) dient zur Einstellung der von dem Krafterzeuger (7) auf den Kraftübertragungspunkt (6) übertragenen Eingangskraft. Hierfür sind in der Ausführungsform gemäß Fig. 5 zwei miteinander fest verbundene schräge Flächen vorgesehen, die horizontal beweglich ist. Die Flächen sind bezüglich ihrer Schräge entgegengesetzt zueinander angeordnet. Die eine Fläche stützt sich dabei an dem Kraftübertragungspunkt (6) an dem Hebel (1) ab, die andere Fläche stützt sich an einer ortsfest bezüglich des Krafterzeugers (7) angeordneten Rolle ab. Bei einer Verschiebung der Flächen wird die auf den Kraftübertragungspunkt (6) übertragene Kraft und somit auch die Ausgangskraft proportional dazu erhöht, während sich zugleich die an die ortfeste Rolle übertragene Kraft verringert. Die Längen der Hebelarme sind bei dieser Ausführungsform der mechanischen Einrichtung konstant.

2. Eine weitere Möglichkeit zur Beeinflussung der Ausgangskraft besteht in der Variation der Hebelarmlänge, wobei eine Variation des die Eingangskraft übertragenden Hebelarmes, des die Ausgangskraft übertragenden Hebelarmes oder auch beider Hebelarme denkbar ist. In den Fig. 1 bis 4 ist die Variation des die Eingangskraft übertragenden Hebelarmes dargestellt. Hierbei wird vorzugsweise die von dem Krafterzeuger (7) abgegebene Kraft über einen verstellbaren Mechanismus an einem nicht festliegenden und somit variablen Kraftübertragungspunkt (6) auf den Hebel (1) übertragen. Zu diesem Zweck ist an dem Hebel (1) eine bestimmte Kontur (10) vorgesehen, wobei jeder Punkt dieser Kontur (10) einen möglichen Kraftübertragungspunkt darstellt. An dieser Kontur (10) liegt eine von dem Krafterzeuger (7) unter Spannung gehaltene Translationseinrichtung (9) an, die vorzugsweise aus einer an der Kontur (10) entlang fahrbaren Rolle besteht. In der Ausführungsform der Fig. 1 ist die Translationseinrichtung (9) an einer in ihrem Winkel verstellbaren Stange (11) angebracht. Die Verstellung des Kraftübertragungspunkts (6) stellt bei den Ausführungsformen gemäß Fig. 1 bis 4 die Eingangsgröße dar. Bei den Ausführungsformen der Fig. 2 bis 4 sind jeweils noch mechanische Hilfsmittel (12) zur Übertragung der Kraft des Krafterzeugers (7) auf den Hebel (1) vorgesehen.

3. Eine dritte Möglichkeit zur Variation der Ausgangskraft besteht schließlich in einer Variation des Kraftangriffswinkels der von dem Krafterzeuger (7) auf den Hebel (1) abgegebenen Kraft. Hierfür sind in den Fig. 6 bis 9 bevorzugte Ausführungsformen angegeben. Gemeinsam ist allen Ausführungsformen, daß der Krafteinwirkpunkt (18) am Hebel (1) ortsfest wählbar sein kann, d.h. die wirksame Hebelarmlänge zwischen dem Krafteinwirkpunkt (18) und dem Drehpunkt (2) ist konstant. Bei den nachfolgenden Ausführungsbeispielen ist der Krafteinwirkpunkt (18) im Bereich des dem Drehpunkt (2) abgewandten Ende des Hebels (1) angeordnet.

Bei der Fig. 6 ist zwischen dem Krafterzeuger (7) und dem Hebel (1) ein Kraftübertragungsstück (13) sowie eine Translationseinrichtung (9) angeordnet. Der Krafterzeuger (7) wirkt an einem Kraftübertragungspunkt (6) auf die Translationseinrichtung (9) ein. Die Translationseinrichtung (9) wiederum wirkt an dem Krafteinwirkpunkt (18), der gleichzeitig mechanischer Verbindungspunkt zwischen Hebel (1) und Translationseinrichtung (9) ist, auf den Hebel (1) ein.

Das Kraftübertragungsstück (13) weist auf seiner dem Hebel (1) zugewandten Seite eine Kontur (10) auf. Die Kontur (10) kann verallgemeinert ausgedrückt auch als räumliche Bahnkurve eines daran entlang zu bewegenden Punkts angesehen werden, nämlich des Kraftübertragungspunkts (6). Die Kontur (10) ist dafür vorgesehen, daß auf ihr eine Translationseinrichtung (9) entlangbewegbar ist. Die Translationseinrichtung (9) ist in einer bevorzugten Ausführungsform der Erfindung als eine an dem Hebel (1) fest angeordnete, drehbare Rolle ausgebildet, deren Drehpunkt der Krafteinwirkpunkt (18) ist. Als weitere vorteilhafte Ausführungsart der Translationseinrichtung (9) kommt jede Art von Gleit- oder Wälzlager in Frage, so z.B. ein Gleitstein, ein Kulissenstein, eine Gleitschiene oder ein Kugellager, um nur einige Beispiele zu nennen.

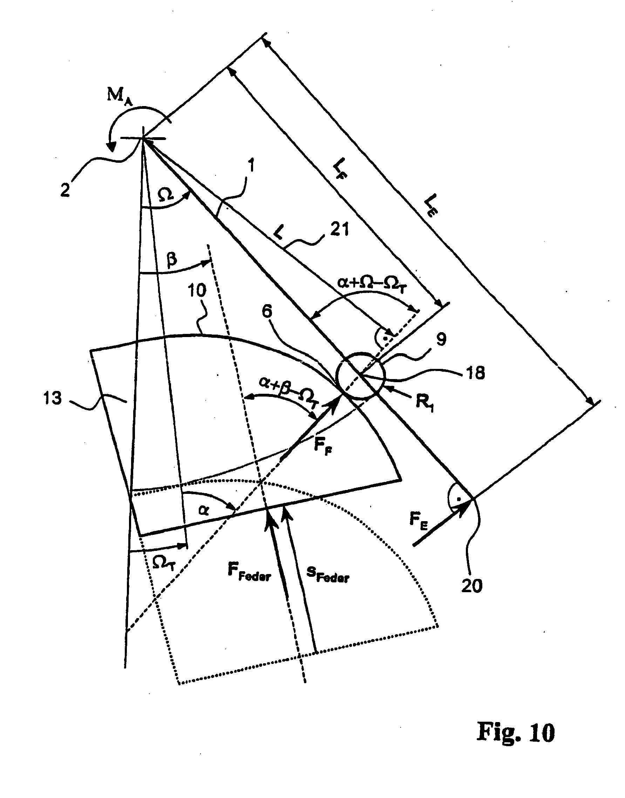

Für eine Bewegung der Translationseinrichtung (9) auf der Kontur (10) ist der Hebel (1) um den Drehpunkt (2) zu verschwenken, wie durch den Doppelpfeil in den Fig. 6 bis 9 sinngemäß angedeutet. Bei der in der Fig. 6 dargestellten Position des Hebels (1) fluchtet dessen Längsachse, welche als Gerade durch den Krafteinwirkpunkt (18) und den Drehpunkt (2) vorstellbar ist, mit der Kraftabgaberichtung des Krafterzeugers (7). Bei einer Verstellung des Hebels (1) ausgehend von der zuvor definierten, einen Totpunkt darstellenden Nullage bewirkt der Krafterzeuger (7) eine Kraftabgabe an den Hebel (1), die infolge der Winkelabweichung zwischen der Kraftabgaberichtung des Krafterzeugers (7) ein Drehmoment um den Drehpunkt (2) bewirkt. Infolge der Winkelabweichung entsteht somit ein "Virtueller Hebelarm", wie nachfolgend anhand der Fig. 10 noch näher beschrieben werden soll. Das Drehmoment wirkt bei geeigneter Auslegung der Kontur (10) in Verstellrichtung des Hebels (1), d.h. eine von außen auf den Hebel (1) einwirkende Eingangskraft zur dessen Verstellung wird durch einen von dem Krafterzeuger (7) abgegebenen Kraftanteil unterstützt.

Mit zunehmender Hebelverstellung ausgehend von dem Totpunkt greift auch der Krafterzeuger (7) in einem zunehmend schräger werdenden Winkel an dem Kraftübertragungspunkt (6) an, sodaß die Länge des virtuellen Hebelarms wächst und hierdurch der unterstützende Kraftanteil des Krafterzeugers (7) ebenfalls ansteigt. Durch geeignete Auslegung der Kontur (10) kann einerseits der Einsetzpunkt der unterstützenden Wirkung des Krafterzeugers (7) festgelegt werden, außerdem kann die Charakteristik der Kraftunterstützung über den Verstellwinkel des Hebels (1) dem jeweiligen Einsatzzweck angepaßt werden.

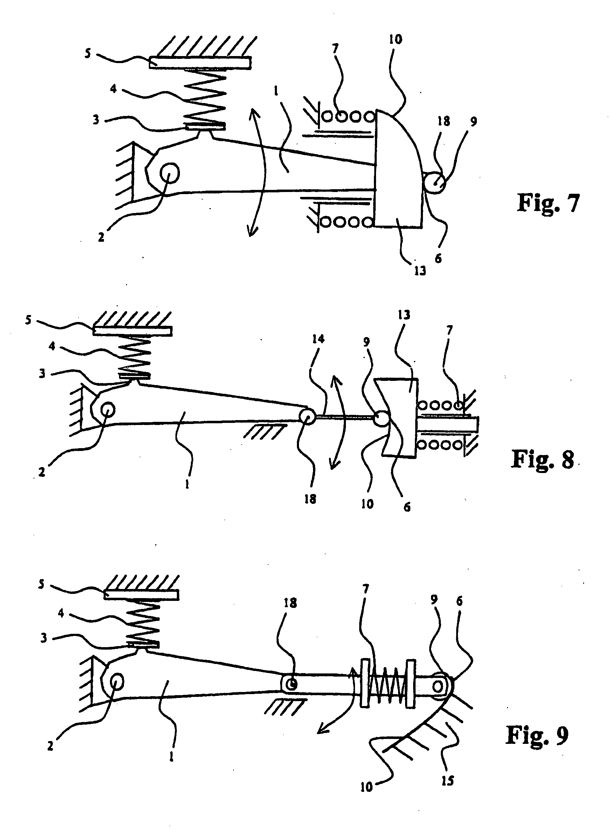

Bei der in der Fig. 7 dargestellten Ausführungsform ist das Kraftübertragungsstück (13) ebenfalls zwischen dem Krafterzeuger (7) und dem Krafteinwirkpunkt (18) angeordnet, jedoch mit einer im Vergleich zu der Fig. 6 entgegengesetzten Kraftabgaberichtung des Krafterzeugers (7). Die Kontur (10) ist ebenfalls auf der dem Krafteinwirkpunkt (18) zugeordneten Seite des Kraftübertragungsstücks (13) angeordnet. Diese Ausführungsform ermöglicht eine besonders kompakte Bauweise der Zuspanneinrichtung.

Bei der Ausführungsform gemäß Fig. 8 ist zwischen dem Kraftübertragungsstück (13) und dem Krafteinwirkpunkt (18) ein Kraftübertragungsmodul (14) angeordnet. Das Kraftübertragungsmodul (14) ist auf seiner dem Hebel (1) zugewandten Seite gelenkig mit dem Hebel (1) am Krafteinwirkpunkt (18) verbunden. Auf seiner dem Kraftübertragungsstück (13) zugewandten Seite ist an dem Kraftübertragungsmodul (14) die Translationseinrichtung (9) angebracht, die wiederum dazu dient, entlang der Kontur (10) bewegbar zu sein.

In einer weiteren Ausführungsform gemäß Fig. 9 ist der Krafterzeuger (7) zwischen dem Krafteinwirkpunkt (18) und einem die Kontur (10) aufweisenden, ortsfest angeordneten Widerlager (15) angeordnet. Der Krafterzeuger (7) ist in diesem Fall auf seiner einen Seite gelenkig mit dem Hebel (1) an dem Krafteinwirkpunkt (18) verbunden. Auf der anderen Seite des Krafterzeugers ist die Translationseinrichtung (9) angeordnet, die wiederum dazu dient, auf der Kontur (10) entlang bewegbar zu sein.

Anhand der Fig. 10 wird nachfolgend die prinzipielle Wirkungsweise der erfindungsgemäßen Zuspanneinrichtung näher erläutert, wobei von der Ausführungsform gemäß Fig. 6 ausgegangen wird. Die Erläuterungen gelten analog auch für die Ausführungsformen der Fig. 7 bis 9 sowie für die anhand der nachfolgenden Figuren noch zu erläuternden Ausgestaltungen der Erfindung.

Zur Erläuterung der prinzipiellen Wirkungsweise sind zunächst einige mathematische Größen festzulegen:

| | |
|---|---|
| $F_E$ | Eingangskraft |
| $F_F$ | Anteil der Kraft der Feder auf den Hebel (1) |
| $F_{Feder}$ | Gesamtkraft der Feder |
| $S_{Feder}$ | Verschiebeweg des Kraftübertragungsstücks (13) |
| $M_A$ | Moment am Hebel (1) um Drehpunkt (2) |
| $\Omega$ | Verschwenkwinkel des Hebels (1) |
| $\Omega_T$ | Totpunktwinkel |
| $\alpha$ | Einwirkwinkel |
| $\beta$ | Winkelabweichung der Krafteinwirkung $F_{Freder}$ von der Nullage des Verschwenkwinkels $\Omega$ |
| $L_F$ | Hebelarmlänge vom Drehpunkt (2) zum Kraftein- wirkpunkt (18) |
| $L_E$ | Hebelarmlänge vom Drehpunkt (2) zum Angriffs- punkt der Eingangskraft ($F_E$) |
| $L$ | Länge des virtuellen Hebelarms (21) |

Das Kraftübertragungsstück (13) wird auf seiner dem Drehpunkt (2) abgewandten Seite mit der Kraft ($F_{Feder}$) des Krafterzeugers (7) beaufschlagt. Die Wirkungsrichtung der Kraft ($F_{Feder}$) sei im folgenden mit einer Abweichung um den Winkel ($\beta$) zu einer Parallelen zu der Längsachse des Hebels (1) in der Winkellage $\Omega = 0$ angenommen. Die Parallelen können auch übereinander liegen.

Ausgehend von einer angenommenen Winkellage $\Omega = \Omega_T$, in welcher die Kontur (10) senkrecht zur Wirkungslinie der Kraft ($F_{Feder}$) verläuft, wird kein ein Drehmoment um den Drehpunkt (2) ausübender Krafteinfluß von dem Krafterzeuger (7) auf den Hebel (1) ausgeübt. Diese Stellung wird auch als Totpunktlage des Hebels (1) bezeichnet. Diese Stellung ist in der Fig. 10 durch das in gestrichelten Linien dargestellte Kraftübertragungsstück (13) angedeutet.

Bei einem Verschwenken des Hebels (1) von dem Wert $\Omega = \Omega_T$ zu größeren Werten hin bewegt sich die Translationseinrichtung (9) entlang der Kontur (10), wobei der Kraftübertragungspunkt (6) mit der Translationseinrichtung (9) wandert. Bei der in der Fig. 10 dargestellten Kontur (10) erfolgt außerdem eine Verschiebung des Kraftübertragungsstücks (13) in Richtung auf den Drehpunkt (2) um das Wegstück ($S_{Feder}$), parallel zur Wirkrichtung der Kraft ($F_{Feder}$) des Krafterzeugers (7). Das Kraftübertragungsstück (13) nimmt dann die mit durchgezogenen Linien dargestellte Position ein. Der Bewegungsverlauf der Translationseinrichtung (9) beim Verschwenken des Hebels (1) ist in der Fig. 10 mit einer gestrichelten Linie, die an der Translationseinrichtung (9) endet, angedeutet.

Bei diesem Verschwenken des Hebels (1) entspannt sich der Krafterzeuger (7), so daß sich die Kraft ($F_{Feder}$) mit zunehmendem Hebelwinkel ($\Omega$) verringert. Mit einem Verschwenken des Hebels (1) um einen Winkel ($\Omega$) nimmt außerdem der Einwirkwinkel ($\alpha$), welcher bei einem Hebelwinkel $\Omega = \Omega_T$ zu $\alpha = 0$ definiert ist, zu. Unter dem Einwirkwinkel ($\alpha$) wird ein Kraftanteil ($F_F$) der Kraft ($F_{Feder}$) des Krafterzeugers (7) auf den Hebel (1) übertragen.

Wie aus der Fig. 10 auch zu erkennen ist, stellt sich bei der dargestellten Hebelposition ein virtueller Hebelarm (21) mit der Länge (L) ein. Den virtuellen Hebelarm (21) stellt man sich senkrecht zu der Einwirkrichtung des von dem Krafterzeuger (7) auf den Hebel (1) abgegebenen Kraftanteils ($F_F$) vor, d.h. die Länge (L) des virtuellen Hebelarms (21) stellt die wirksame Hebelarmlänge für die Bestimmung des von dem Kraftanteil ($F_F$) beigesteuerten Moments um den Drehpunkt (2) dar. Zwischen dem Hebel (1) und dem virtuellen Hebelarm (21) bildet sich dabei ein Winkel von 90°-$\alpha$-$\Omega$+$\Omega_T$. Die Länge (L) des virtuellen Hebelarms (21) berechnet sich wie folgt:

$$L = L_F \bullet \sin(\alpha + \Omega - \Omega_T) \qquad [1]$$

Für eine Steuerung des Verschwenkens des Hebels (1) greift an einem Kraftangriffspunkt (20) die Eingangskraft ($F_E$) an. Das von dem Hebel (1) insgesamt erzeugte, nutzbare Ausgangsmoment ($M_A$) setzt sich damit aus dem von der Eingangskraft ($F_E$) erzeugten Moment und dem von dem Kraftanteil ($F_F$) des Krafterzeugers (7) erzeugten Moment zusammen und kann wie folgt berechnet werden:

$$M_A = F_{Feder} \bullet L_F \bullet \frac{\sin(\alpha + \Omega - \Omega_T)}{\cos(\alpha + \beta)} + F_E \bullet L_E \qquad [2]$$

Der Winkel ($\alpha$) hängt von der jeweils gewählten Kontur (10) sowie vom Hebelwinkel ($\Omega$) ab, ist somit ein Funktion von $\Omega$.

$$\alpha = f_{Kontur}(\Omega) \qquad [3]$$

Das Ausgangsmoment ($M_A$) kann damit bei bekannter Kontur bzw. bekannter Funktion $f_{Kontur}$ und gegebenen Kräften $F_E$ und $F_{Feder}$ aus dem variablen Hebelwinkel ($\Omega$) bestimmt werden.

Bei einem Verschwenken des Hebels (1) von dem Wert $\Omega = \Omega_T$ zu kleineren Werten hin wird bei der in der Fig. 10 dargestellten Kontur kein Moment von dem Krafterzeuger (7) auf den Hebel (1) ausgeübt, was durch eine kreisbogenförmige Ausbildung der Kontur (10) bewirkt wird. Der Verlauf des Kreisbogens entspricht im wesentlichen dem gestrichelt dargestellten Bewegungsverlauf der Translationseinrichtung (9) bei $\Omega < \Omega_T$.

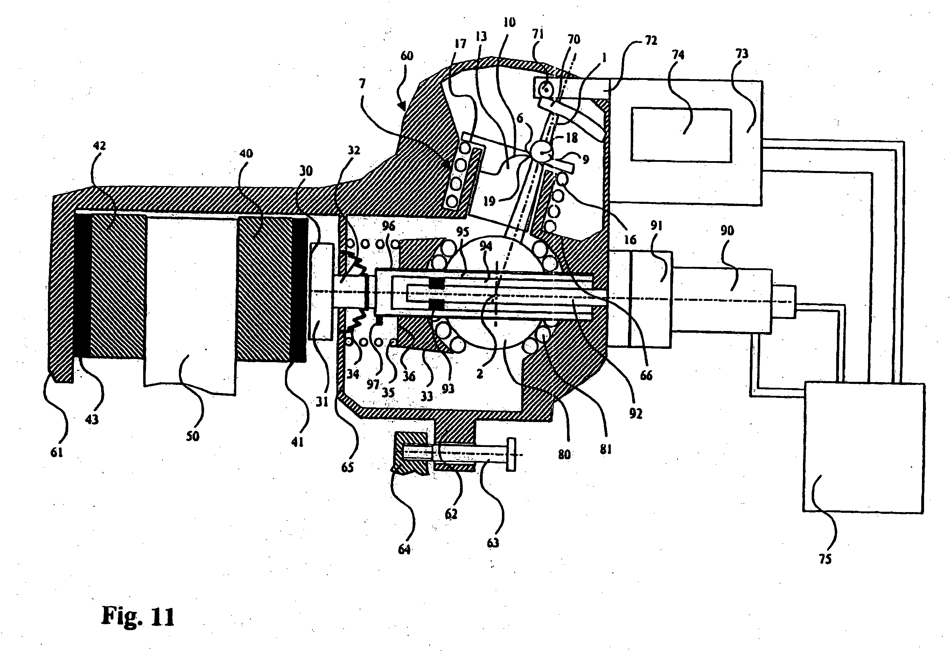

Eine weitere vorteilhafte Ausführungsform, bei der die Ausgangskraft über eine anhand der Fig. 6 bis 10 zuvor erläuterten Winkelveränderung vorgenommen wird, wird nun anhand der Fig. 11 bis 13 näher erläutert. In den Fig. 11 bis 13 ist jeweils die gleiche Ausführungsform dargestellt, jedoch in unterschiedlichen Zuspannstellungen. Des weiteren wird eine konkrete Anwendung als Zuspanneinrichtung für eine Radbremse an Fahrzeugen anhand der Fig. 11 bis 13 näher erläutert. Die unterschiedlichen Zuspannstellungen stellen dabei Fahrtstellung (nicht zugespannt), Teilbremsung und Vollbremsung dar.

Der in der Fig. 11 in Fahrtstellung dargestellte Bremsaktuator für eine Fahrzeugbremse weist eine Zuspanneinrichtung gemäß dem anhand der Fig. 6 bis 10 erläuterten Prinzip auf. Die Zuspanneinrichtung weist neben den bereits erläuterten Teilen (1, 2, 6, 7, 9, 10, 13, 18) einen an dem Hebel (1) an dem dem Drehpunkt (2) abgewandten Ende angeordneten Zahnkranzsektor (70) auf, welcher einer gekrümmten Zahnstange ähnlich ist. Der Zahnkranzsektor (70) steht mit einem Zahnrad (71) in Eingriff, welches an der Eingangsgrößen/Kraft-Umsetzeinrichtung (72, 73, 74) angeordnet ist. Das Zahnrad (71) bewirkt bei einer Drehung ein Verschwenken des Hebels (1), d.h. eine Änderung der Winkellage ($\Omega$) des Hebels (1).

Das Zahnrad (71) steht über ein Getriebe (72) mit einer Antriebseinheit (73), welche einen vorzugsweise als Elektromotor ausgebildeten Antriebsmotor (74) aufweist, in Wirkverbindung. Die Antriebseinheit (73) enthält je nach Ausführungsform weitere Bauteile wie etwa elektrische Halbleiterbauelemente zur Ansteuerung des Elektromotors (74) oder elektrische Widerstände, z. B. zur Sensierung der Stromaufnahme des Elektromotors (74), enthalten kann. In einer vorteilhaften Ausführungsform der Erfindung weist die Antriebseinheit (73) noch eine Positions-Sensiereinrichtung für die Drehposition der Abtriebswelle des Elektromotors auf, z. B. eine Infrarot-Lichtschranke. Die Antriebseinheit (73) ist über Leitungen mit einem elektronischen Steuergerät (75) zum Austausch von Daten und Informationen sowie zur Energieversorgung verbunden.

In einer vorteilhaften Weiterbildung der Erfindung ist der Elektromotor (74) als Schrittmotor ausgebildet, z.B. in Form eines geschalteten Reluktanzmotors. In diesem Fall kann die Positions-Sensiereinrichtung entfallen, da über die schrittweise Ansteuerung des Elektromotors (74) die Drehposition der Abtriebswelle dem Steuergerät (75) bekannt ist.

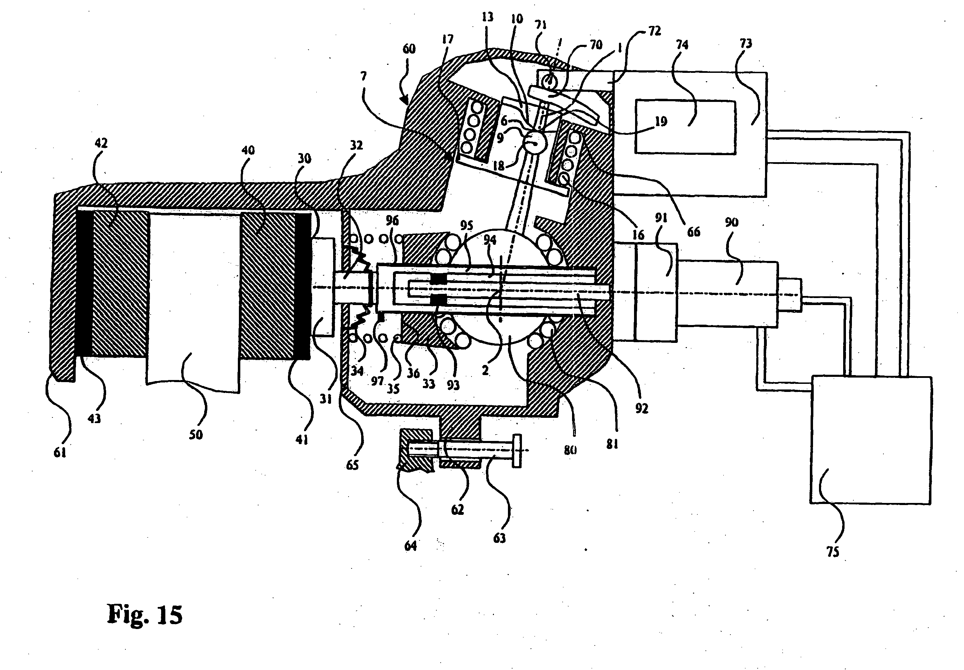

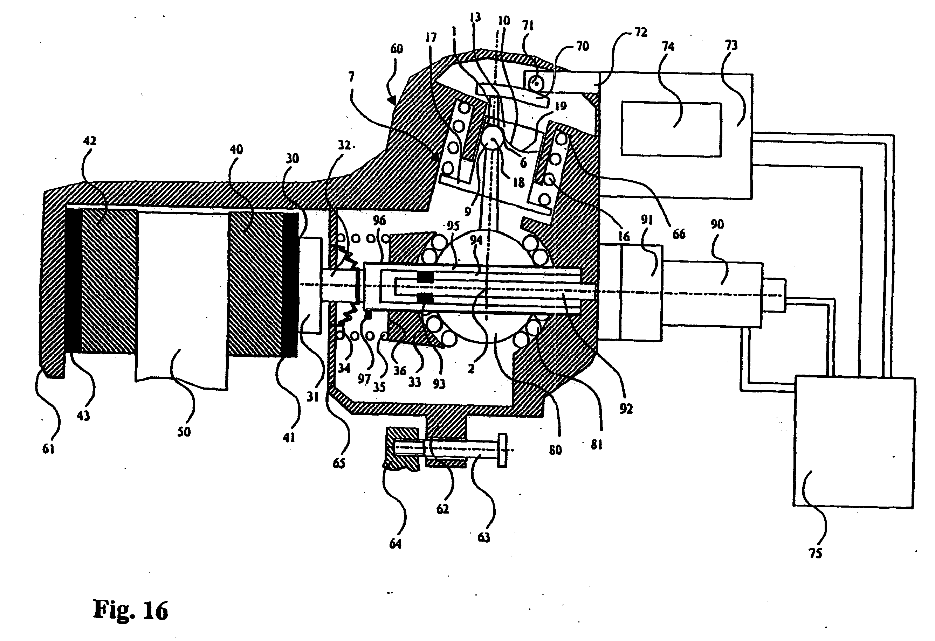

Die Kraftaufnahmeeinrichtung (4, 5) der in den Fig. 1 bis 9 dargestellten Einrichtungen ist in der Ausführungsform gemäß Fig. 11 bis 16 als eine Bremsscheibe (50) sowie zwei beidseitig der Bremsscheibe (50) angeordnete Bremsbeläge (40, 41, 42, 43), jeweils bestehend aus einem Verschleißbereich (40, 42) und einer Rückenplatte (41, 43), ausgebildet. Insbesondere der Verschleißbereich (40, 42) ist mit einer bestimmten Elastizität versehen, während die Bremsscheibe (50) und die Rückenplatten (41, 43) vergleichsweise weniger elastisch sind.

Die Krafteinleitung in die Bremsscheibe (50) über die Bremsbeläge (40, 41, 42, 43) erfolgt über einen Stempel (31), welcher die Ausgangskraft ($F_A$) der Zuspanneinrichtung über eine Anlagefläche (30) flächig auf den ihm zugewandten Bremsbelag (40, 41) ausübt. Der auf der gegenüberliegenden Seite der Bremsscheibe (50) angeordnete Bremsbelag (42, 43) stützt sich entgegen der Ausgangskraft ($F_A$) an einem mit dem Gehäuse (60) der Zuspanneinrichtung verbundenen Gehäuseteil (61) ab.

In dem in der Fig. 11 dargestellten Zuspannzustand weist die Anlagefläche (30) einen bestimmten, vorgegebenen Abstand zu der Rückenplatte (41) des Bremsbelags (40, 41) auf. Dieser Abstand wird auch als Lüftspiel bezeichnet. In der Praxis stellt sich das Lüftspiel idealerweise gleichmäßig auf beiden Seiten der Bremsscheibe (50) ein. Zur einfacheren Erläuterung sind in den nachfolgenden Ausführungen sämtliche Lüftspiel-Abstände als ein einziges resultierendes Lüftspiel zwischen dem Stempel (31) und der Rückenplatte (41) dargestellt.

Der Stempel (31) ist über eine eine Öffnung der Wand (65) des Gehäuses (60) durchdringende Stange (32) mit einer Lüftspiel-Verstelleinrichtung (90, 91, 92, 93, 94, 95, 96, 97) verbunden, welche an ihrer Außenseite über ein Gewinde (96) drehbar mit einem Druckstück (33) verbunden ist. Das Druckstück (33) dient zur Übertragung der Ausgangskraft ($F_A$) auf den Stempel (31).

Der Hebel (1) ist an seinem im Bereich des Drehpunkts (2) befindlichen Ende mit einer Ausgangskraft-Erzeugungseinrichtung (80) verbunden, die bei einer Änderung der Winkellage ($\Omega$) des Hebels (1) eine gewisse Wegänderung des Druckstücks (33) und damit auch des Stempels (31) bewirkt. Bei einer Vergrößerung des Winkels ($\Omega$) von der in der Fig. 11 dargestellten Nullage erfolgt beispielsweise eine Bewegung des Stempels (31) in Richtung auf die Rückenplatte (41) zu. Hierbei verringert sich zuerst das Lüftspiels, bis der Stempel (31) an der Rückenplatte (41) zur Anlage kommt. Bei einer weiteren Vergrößerung des Winkels ($\Omega$) wird eine Bremskraft erzeugt.

Die Ausgangskraft-Erzeugungseinrichtung (80) kann beispielsweise als Exzenter ausgebildet sein. In einer besonders vorteilhaften Ausführungsform ist zwischen der Einrichtung (80) und dem Druckstück (33) eine Evolventen-Kontur vorgesehen, mittels der eine im wesentlichen lineare Abhängigkeit des von dem Druckstück (33) zurückgelegten Wegs von dem Winkel ($\Omega$) erzielt werden kann. Hierdurch wird ein besonders einfacher, analytischer Zusammenhang erzielt, was den Vorteil hat, daß in dem Steuergerät (75) ausgeführte Algorithmen zur Bremskraftregelung einfach gehalten werden können. Des weiteren ist der Verschleiß gegenüber andersartigen Konstruktionen geringer.

Die Ausgangskraft-Erzeugungseinrichtung (80) ist zwischen dem Druckstück (33) und einem Teil des Gehäuses (60) reibungsarm gelagert, beispielsweise durch ein Kugel- oder Rollenlager (81).

Der Krafterzeuger (7) weist in der Ausführungsform der Fig. 11 bis 13 eine unter Vorspannung stehende Feder (16) auf, die sich an einem Ende auf einer gehäusefesten Anlagefläche (66) in dem Gehäuse (60) abstützt. Das andere Ende der Feder (16) drückt gegen eine Halteplatte (17), die fest mit dem Kraftübertragungsstück (13) verbunden ist. Das Kraftübertragungsstück (13) seinerseits weist die bereits erwähnte Kontur (10) auf, über die die Vorspannkraft der Feder (16) über die Translationseinrichtung (9) auf den Hebel am Krafteinwirkpunkt (18) einwirkt.

Wie aus der Fig. 11 auch erkennbar ist, weist die Kontur (10) einen Scheitelpunkt (19) auf, der im folgenden auch als Totpunkt bezeichnet werden soll. Ausgehend von der Nullage des Winkels ($\Omega$) wird dieser Totpunkt (19) bei einem bestimmten Totpunktwinkel ($\Omega_T$) erreicht. Bei Winkellagen, die kleiner als der Totpunktwinkel ($\Omega_T$) sind, erfolgt bei Abschaltung oder Ausfall der von der Eingangsgrößen/Kraft-Umsetzeinrichtung (72, 73, 74) über das Zahnrad (71) auf den Hebel (1) ausgeübten Kraft ($F_E$) eine selbsttätige Rückstellung des Hebels (1) in die Nullage ($\Omega = 0$), was von dem Krafterzeuger (7) ausgelöst wird.

Bei Überschreitung des Totpunktwinkels ($\Omega_T$) erfolgt aufgrund der dann nach einer vorgegebenen Funktion zunächst schwach, dann stärker abfallenden Kontur (10) ein zunehmender, unterstützender Krafteinfluß des Krafterzeugers (7) in Zuspannrichtung. Durch den unterstützenden Krafteinfluß kann der Energiebedarf der Eingangsgrößen/Kraft-Umsetzeinrichtung (72, 73, 74) vergleichsweise gering gehalten werden. Durch entsprechende Auslegung der Kontur (10) ist es außerdem möglich, eine Rückstellung der Zuspanneinrichtung in die Nullage unter Ausnutzung der infolge der Elastizität in der Kraftaufnahmeeinrichtung (4, 5) bzw. der Bremse (40, 41, 42, 43, 50) gespeicherten Energie zu bewirken, sodaß eine selbstlösende Bremsencharakteristik in dem gesamten Zuspannbereich realisierbar ist.

Eine die Stange (32) umgebende Dichtung (34) schützt das Innere des Gehäuses (60) vor Verschmutzung und verhindert außerdem den Austritt von Schmiermitteln aus dem Gehäuse (60). Zur Rückstellung des Stempels (31) im Bereich des Lüftspiels, in dem von der Kraftaufnahmeeinrichtung (4, 5) bzw. der Bremse (40, 41, 42, 43, 50) keine Rückstellkraft mehr aufgebracht werden kann, bewirkt eine sich zwischen einer Wand (65) des Gehäuses (60) und dem Druckstück (33) abstützende Rückstellfeder (35) eine Rückstellung des Stempels (31) in eine mittels des Hebels (1) vorgegebene Lage.

Das Gehäuse (60) ist mittels eines gehäusefesten Flansches (62) über eine Schraube (63) mit einem Befestigungspunkt (64) verbunden. Der Befestigungspunkt (64) ist Bestandteil eines mit einer zu bremsenden Fahrzeugachse achsfest verbundenen Bremsträgers bekannter Bauart, auf den nicht weiter eingegangen werden soll. Die dargestellte Befestigungsart ist stark vereinfacht angegeben. In der Praxis könnte man z.B. eine Bolzenführung mit beispielsweise zwei Bolzen anwenden.

Die in dem Gehäuse (60) räumlich neben der Ausgangskraft-Erzeugungseinrichtung (80) angeordnete Lüftspiel-Verstelleinrichtung (90, 91, 92, 93, 94, 95, 96, 97) weist einen als Elektromotor ausgebildeten Verstellmotor (90) auf, der über Leitungen mit dem Steuergerät (75) verbunden ist. Über geeignete Ansteuersignale von dem Steuergerät (75) kann der Verstellmotor (90) um einen definierten Winkel in die eine oder die andere Richtung verstellt werden.

Der Verstellmotor (90) ist über ein Getriebe (91) mit einem Verstellmechanismus (92, 93, 94, 95, 96, 97) verbunden. Das Getriebe (91) bewirkt eine Verringerung der Drehzahl des Verstellmotors bei gleichzeitiger Drehmomenterhöhung. In dem Getriebe (91) ist ausgangsseitig eine Verstellwinkel-Erfassungseinrichtung angeordnet, deren Signale über die Leitungen an das Steuergerät (75) abgegeben werden. Mittels der Signale der Verstellwinkel-Erfassungseinrichtung kann das Steuergerät (75) bei ihm bekannter Steigung des Gewindes (96) jederzeit den Verstellweg der Verstellspindel (95) und damit durch geeignete Algorithmen das eingestellte Lüftspiel erfassen. Als Verstellwinkel-Erfassungseinrichtung kann es in der Praxis auch vorteilhaft sein, einen in dem Verstellmotor (90) ohnehin vorhandenen Sensor zu verwenden, z.B. einen Encoder. In elektronisch kommutierten Motoren ist auch die Verwendung eines Resolver oder Kommutierungssensors vorteilhaft. Hierdurch kann auf einen gesonderten Sensor zur Verstellwinkel-Erfassung verzichtet werden.

Ausgangsseitig des Getriebes (91) ist eine Keilwelle (92) vorgesehen, welche über Keile (93) mit einer Verstellspindel (95) in Eingriff steht. Die Keile (93) sind dabei fest mit der Keilwelle (92) verbunden und laufen in einer innerhalb der Verstellspindel (95) angeordneten Nut (94). Über die Keile (93) und die Nut (94) kann eine Drehbewegung der Keilwelle (92), ausgelöst von dem Verstellmotor (90), auf die Verstellspindel (95) übertragen werden, die infolge eines an ihrer Außenseite angeordneten Gewindes (96), das seinerseits mit einem an dem Druckstück (33) angeordneten Innengewinde in Eingriff steht, eine Längsverschiebung der Verstellspindel (95) gegenüber der Keilwelle (92) bewirkt. Hierbei gleiten die Keile (93) in der Nut (94) entlang.

Infolge der Längsverschiebung der Verstellspindel (95) erfolgt über die fest mit der Verstellspindel (95) verbundenen Teile (31, 32) eine Verringerung bzw. Vergrößerung des Lüftspiels. Über einen fest mit der Verstellspindel (95) verbundenen Anschlagstutzen (97) wird die Rückstellbewegung der Verstellspindel (95) bei einer Vergrößerung des Lüftspiels mechanisch begrenzt, derart, daß die Verstellspindel (95) nur soweit eingefahren werden kann, bis der Anschlagstutzen (97) an einer Anlagefläche (36) des Druckstücks (33) zur Anlage kommt.

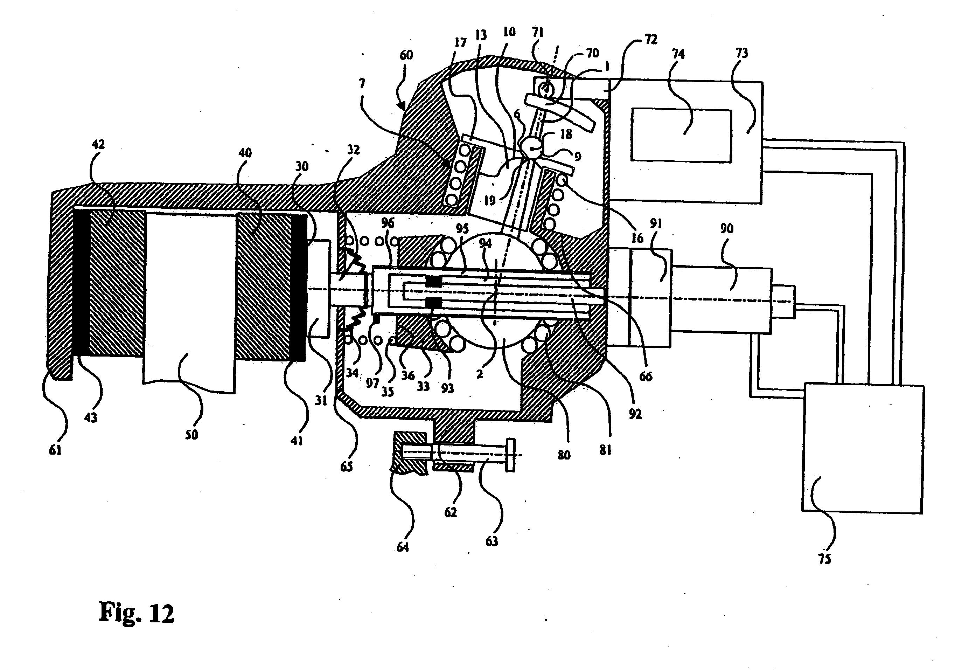

In der in der Fig. 12 dargestellten Stellung ($\Omega = \Omega_T$) des Hebels (1) erreicht der Kraftübertragungspunkt (6) gerade den Totpunkt der Kontur (10). In diesem Zustand bewirkt der Krafterzeuger (7) keine für eine Verstellung des Hebels (1) in der einen oder der anderen Richtung geeignete Kraftunterstützung. In dieser Stellung liegt gemäß einer vorteilhaften Ausgestaltung der Erfindung der Stempel (31) bereits an der Rückenplatte (41) des Bremsbelags (40, 41) an, d. h. das Lüftspiel ist in dieser Stellung stets überwunden. Die bis zu dieser Stellung erforderliche Zuspannkraft nach Überwindung des Lüftspiels wird vollständig von dem Elektromotor (74) aufgebracht.

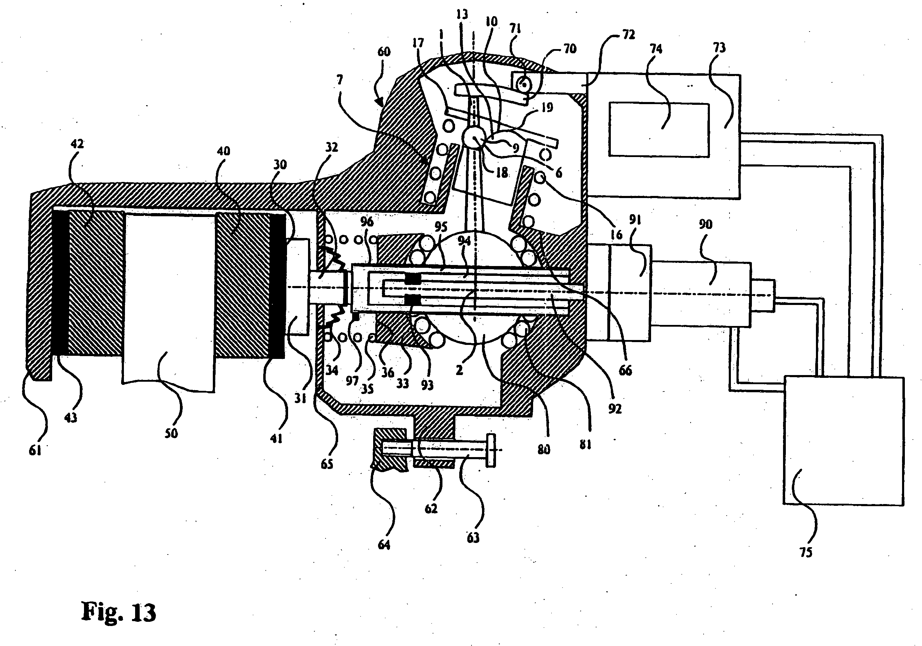

In der in Fig. 13 dargestellten Stellung des Hebels (1) ist die Maximalauslenkung dargestellt, somit also die Bremse mit maximaler Zuspannkraft beaufschlagt. Der Kraftübertragungspunkt (6) befindet sich nun in einem eine unterstützende Wirkung des Krafterzeugers (7) hervorrufenden Abschnitt der Kontur (10). Ein weitergehendes Verstellen des Hebels (1) würde den Kraftübertragungspunkt (6) in einen abgeflachten Konturabschnitt bringen, in welchem der Krafterzeuger (7), analog zu der Totpunktstellung, keine unterstützende Kraft mehr hervorrufen würde. In diesem Fall würde der Hebel (1) infolge der Rückstellkraft der elastisch vorgespannten Bremse (40, 41, 42, 43, 50) zurückbewegt werden, so daß sich durch die dargestellte Kontur ein stabiler Arbeitspunkt bei maximaler Bremsenzuspannung ergibt.

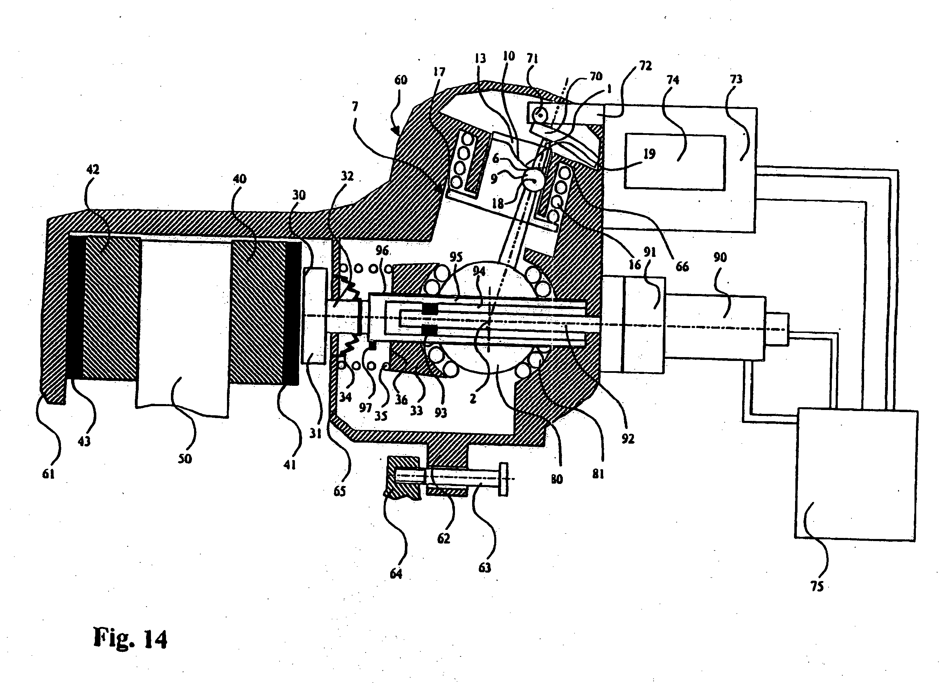

Die in den Fig. 14 bis 16 in verschiedenen Zuspannstellungen dargestellte Ausführungsform der Zuspanneinrichtung weist im Gegensatz zu der anhand der Fig. 11 bis 13 beschriebenen Zuspanneinrichtung eine geänderte Anordnung des Krafterzeugers auf, bei der die das Kraftübertragungsstück (13) tragende Halteplatte (17) in Richtung auf den Drehpunkt (2) weist. Die Funktionsweise entspricht der in den Fig. 11 bis 13 dargestellten Ausführungsform, nur mit spiegelbildlicher Anordnung des Krafterzeugers (7). Diese Art der Ausführungsform kann auch als Zuspanneinrichtung mit freier Feder (16) bezeichnet werden, während die Ausführungsform gemäß Fig. 11 bis 13 auch als Zuspanneinrichtung mit gefesselter Feder (16) bezeichnet werden kann.

Bei der erfindungsgemäßen Zuspanneinrichtung ist es vorteilhaft, die Konstruktion derart auszulegen, daß der Hebelwinkel ($\Omega$) bei Erreichen der Lüftspielgrenze ($\Omega = \Omega_{LS}$) auch zugleich nahe an dem Totpunktwinkel ($\Omega_T$) liegt. Hierdurch setzt der unterstützende Einfluß des Krafterzeugers (7) beim Zuspannvorgang dann ein, wenn die Bremsbeläge (40, 41, 42, 43) mit einer Bremskraft beaufschlagt werden und demzufolge ein ansteigender Bedarf an Zuspannenergie entsteht, der dann zu einem großen Teil aus dem in dem Krafterzeuger gespeicherten Energievorrat gedeckt werden kann. Für eine selbstlösende Bremsencharakteristik ist aber die Lüftspielgrenze ($\Omega \Omega_{LS}$) stets kleiner zu wählen als der Totpunktwinkel ($\Omega_T$).

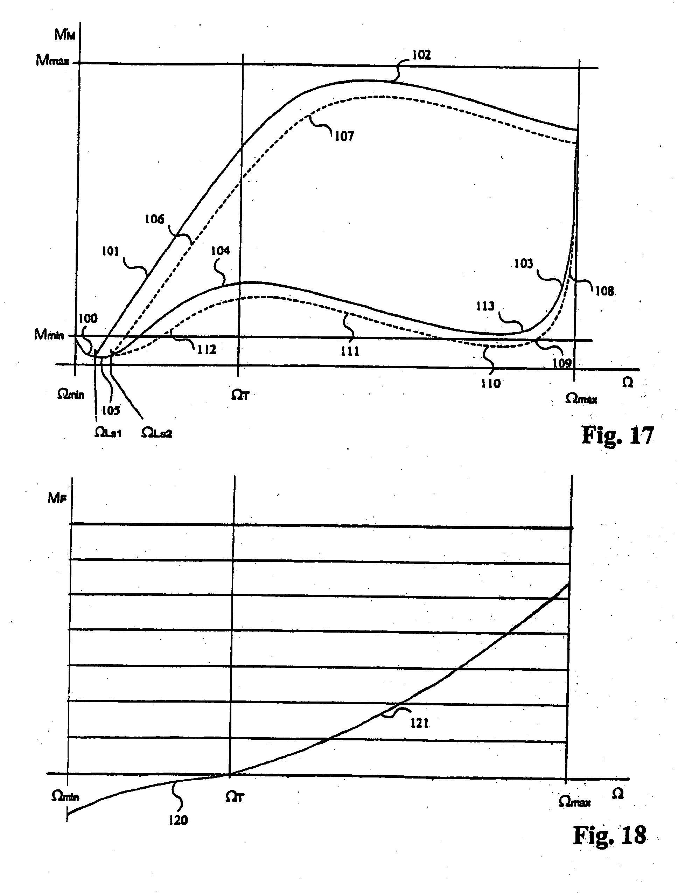

In der Fig. 17 ist der Verlauf des von dem Elektromotor (74) in die Zuspanneinrichtung eingespeisten Drehmoments ($M_M$) jeweils beim Zuspannvorgang und bei der Rückstellung in die Fahrtstellung dargestellt. Der in durchgezogenen Linien dargestellte Kurvenverlauf (101, 102, 103, 104, 105, 113) ist für eine erste Einstellung des Lüftspiels ($\Omega_{LS1}$) mittels der Lüftspiel-Verstelleinrichtung (90, 91, 92, 93, 94, 95, 96, 97) angegeben. Der in gestrichelten Linien dargestellte Kurvenverlauf (106, 107, 108, 109, 110, 111, 112) ist für einen weiteren, im Vergleich zu dem zuvor genannten Kurvenverlauf vergrößerten Wert des Lüftspiels ($\Omega_{LS2}$) dargestellt.

Ausgehend von der Fahrtstellung ($\Omega = \Omega_{min}$) des Hebels (1) wird der Hebel mit einem Anfangsmoment beaufschlagt, in dessen Folge er eine Bewegung in Zuspannrichtung ausführt. Hierbei, d. h. bis zum Erreichen des Anlegepunkts des Stempels (31) an den Bremsbelag (40, 41) bei $\Omega = \Omega_{LS1}$, ist das von dem Elektromotor (74) abgegebene Drehmoment ($M_M$) relativ gering. In diesem Bereich ist der abflachende Bereich der Kontur bis zu deren Totpunkt zu überwinden, wobei der Krafterzeuger (7) bereits eine Gegenkraft zu dem von dem Elektromotor abgegebenen Drehmoment bewirkt. Diese Gegenkraft nimmt mit zunehmendem Winkel ($\Omega$) ab.

Ausgehend von dem Anfangswert ($M_{min}$) nimmt das Motormoment ($M_M$) gemäß dem Kurvenstück (100) zunächst leicht ab, um dann in dem Kurvenstück (101) einen steilen Anstieg zu erfahren, welcher sich bei Erreichen und Überschreiten des Totpunktwinkels ($\Omega_T$) übergangslos in dem Kurvenstück (102) fortsetzt, um dann infolge zunehmender Unterstützungswirkung durch den Krafterzeuger (7) abzuflachen und leicht abzunehmen, bis der maximale Zuspannwinkel ($\Omega_{max}$), der einer Vollbremsung entspricht, erreicht wird.

Beginnend mit dem Kurvenstück (103) wird die Bremse wieder gelöst, d. h. in Richtung Fahrtstellung verstellt. Wie anhand der Fig. 17 am Kurvenstück (103) erkennbar ist, muß das Motormoment ($M_M$) zunächst eine Hysterese überwinden, bis der Hebel (1) eine Bewegung in nennenswertem Umfang ausführt. In einem sich daran anschließenden, relativ flach verlaufenden Kurvenstück (113), von dem erwünscht ist, daß er im Bereich kleiner Motormomente wie z.B. dem Anfangswert ($M_{min}$) liegt, wird dann eine Rückstellung des Hebels (1) bewirkt. Hierbei steigt das Motormoment ($M_M$) im Bereich des Totpunktwinkels ($\Omega_T$) wiederum an, um dann übergangslos in dem Kurvenstück (104) geringer zu werden und über die Kurvenstücke (105, 100) wiederum zu dem Anfangswert ($M_{min}$) zurückzukehren.

Der Anstieg des Motormoments ($M_M$) im Bereich des Totpunktwinkels ($\Omega_T$) wird durch eine von der maximalen Zuspannstellung aus stetig geringer werdende Bremsenhysterese bewirkt, wodurch sich der rückstellende Krafteinfluß vorgespannten Bremse leichter entfalten kann. Um einen bestimmten Zuspannwinkel ($\Omega$) zu halten, ist daher in diesem Bereich ein erhöhtes Motormoment ($M_M$) erforderlich.

Bei einem vergrößerten Lüftspiel ($\Omega_{LS2}$) setzt der nach Überschreitung der Kurvenstücke (100, 105) einsetzende rapide Anstieg des Motormoments ($M_M$) gemäß Kurvenstück (106) im Vergleich zu dem zuvor beschriebenen Fall später ein. Die Kurvenstücke (101, 102) bei kleinerem Lüftspiel einerseits und die Kurvenstücke (106, 107) bei größerem Lüftspiel andererseits verlaufen im wesentlichen parallel zueinander, derart, daß bei vergrößertem Lüftspiel die von dem Motor aufzubringenden Motormomente ($M_M$) bei gleichem Hebelwinkel ($\Omega$) geringer sind.

Auch im Rückstellzweig (108, 109, 110, 111, 112) sind die Motormomente ($M_M$) im Vergleich zu dem Fall mit kleinerem Lüftspiel geringer. Wie anhand der Fig. 17 außerdem erkennbar ist, unterschreitet das Motormoment ($M_M$) an der Stelle (109) den erwünschten Minimalwert ($M_{min}$) für das Motormoment ($M_M$) und verläuft im Kurvenstück (110) ebenfalls darunter.

Ein Verlauf des Motormoments ($M_M$) im Bereich negativer Werte ist nicht erwünscht, da sich dann eine selbstzuspannende Bremsencharakteristik ergeben würde. Die in der Fig. 17 dargestellten Verläufe stellen eine in der Praxis erwünschte selbstlösende Bremsenscharakteristik dar. Die Bremsenscharakteristik kann über die Wahl des Lüftspiels in gewissen Bereichen beeinflußt und einem gewünschten Verlauf angepaßt werden.

In der Fig. 18 ist der durch den Krafterzeuger (7) bzw. dessen Feder (16) auf den Bremshebel (1) ausgeübte, unterstützende Momentenanteil ($M_F$) dargestellt. Das anhand der Fig. 17 bereits beschriebene Motormoment ($M_M$) stellt in Summe mit dem vom Krafterzeuger ausgeübten Moment ($M_F$) das gesamte auf den Hebel (1) einwirkende und auf die Bremse abgebbare Ausgangsmoment ($M_A$) der Zuspanneinrichtung dar.

In einem Bereich (120), in welchem der Totpunkt noch nicht überwunden ist, weist das Moment ($M_F$) negative Werte auf, was einen rückstellenden Einfluß auf den Hebel (1) in Richtung der Nullage ($\Omega = 0$) hat. In diesem Bereich arbeitet der Krafterzeuger (7) entgegen dem Motormoment ($M_M$), was zur Folge hat, daß der Elektromotor (74) auch im Bereich des Lüftspiel ein bestimmtes Moment zum Bewegen des Hebels (1) in Zuspannrichtung erbringen muß. Bei Erreichen des Totpunktwinkels ($\Omega_T$) setzt dann der unterstützende Kraft- bzw. Momenteneinfluß des Krafterzeugers (7) gemäß dem Kurvenverlauf (121) ein, d.h. der Elektromotor (74) wird beim Zuspannen entlastet.

Der Kurvenverlauf (121) stellt eine erwünschte Sollfunktion dar, die anhand von typischen Bremsenauslegungen ermittelt werden kann. Hierfür ist es z.B. denkbar, eine Vielzahl von Einzelbremsen hinsichtlich ihrer Zuspannkennlinie, d.h. des Momentenbedarfs für die Zuspannung gemessen über den Hebelwinkel ($\Omega$), experimentell auszuwerten. Es ist vorteilhaft, die Sollfunktion dann als eine Ausgleichfunktion zu bestimmen, die unterhalb aller experimentell ermittelten Zuspannkennlinien liegt und diese tangiert. Der Vorteil hierbei ist, daß eine selbstlösende Bremsencharakteristik sichergestellt werden kann, da in jeder Hebelstellung ($\Omega$) von dem geringsten Zuspann-Momentenbedarf aller untersuchten Bremsen ausgegangen wird.

Die Sollfunktion wird vorzugsweise z.B. mittels Ausgleichsrechnung oder Interpolation bestimmt. Der Kurvenverlauf (121) steht in direktem Zusammenhang mit der Kontur (10). Die Kontur (10) kann anhand des Kurvenverlaufs (121), d.h. der Sollfunktion, z.B. mittels eines numerischen Iterationsverfahrens bestimmt werden.

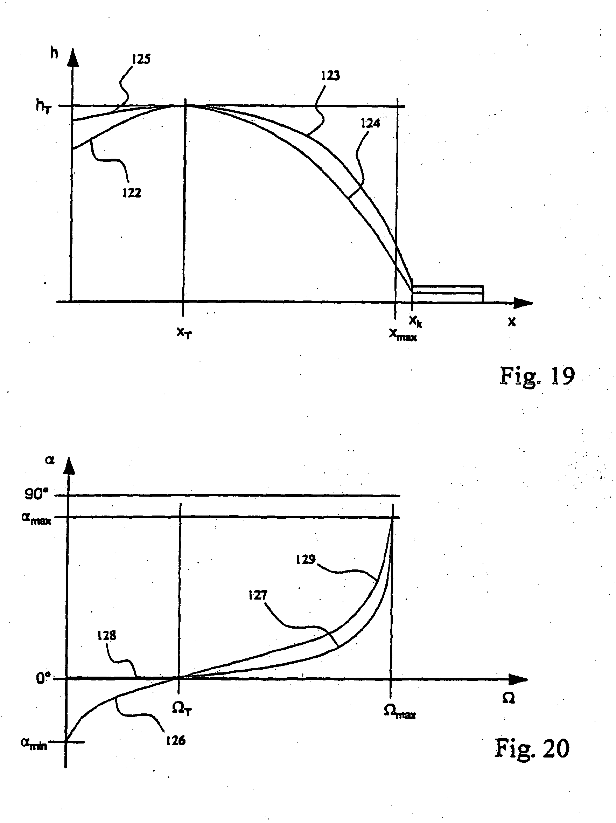

Anhand der Fig. 19 und 20 werden bevorzugte Ausführungsformen der Kontur (10) sowie der zugehörigen Funktion $f_{Kontur}$ des Einwirkwinkel ($\alpha$) in Abhängigkeit des Hebelwinkels ($\Omega$) erläutert.

Ein bevorzugter Verlauf der Kontur (10), wie auch schon in den Fig. 11 bis 13 angedeutet, ist in der Fig. 19 durch die Kurvenstücke (122, 123) dargestellt. Der räumliche Verlauf der Kontur (10) hinsichtlich der Ordinate (h) beginnt vom Anfang der Kontur (x = 0) zunächst flach ansteigend mit einer geringen konvexen Krümmung und geht ab dem Totpunkt ($x_T$), welcher bei dem Hebelwinkel ($\Omega_T$) erreicht wird, in einen zunächst gering, dann schneller abfallenden Bereich mit stärker konvex gekrümmtem Verlauf über. Bei dem Wert ($x_{max}$) wird dann der Maximalwert ($\Omega_{max}$) für die Verstellung des Hebels (1) in Zuspannrichtung erreicht. Von dieser Stellung an ist keine weitere Verstellung des Hebels (1) erwünscht. Die Kontur (10) wird jedoch ein Stück weiter geführt bis zu dem Wert ($x_k$), von dem an die Kontur (10) im wesentlichen gerade verläuft. Die Weiterführung der Kontur (10) ist aufgrund der Abmessungen der Translationseinrichtung (9) erforderlich, damit diese nicht vor Erreichen des Winkels ($\Omega_{max}$) an dem gerade verlaufenden Bereich der Kontur (x > $x_k$) anstößt. Durch den gerade verlaufenden Bereich der Kontur ergibt sich außerdem ein stabiler Endpunkt bei der Verstellung des Hebels (1).

Die aus den Kurvenstücken (122, 123) zusammengesetzte Kontur wird vorzugsweise bei einer Zuspanneinrichtung für Bremsen an Nutzfahrzeugen eingesetzt. Alternativ zu dem Kurvenstück (122) kann auch eine Kontur gemäß Kurvenstück (125) in dem Bereich x < $x_T$ verwendet werden. Auch alle dazwischenliegenden Konturen sind vorteilhaft anwendbar. Das Kurvenstück (125) verläuft beispielsweise im wesentlichen auf einer Kreiskontur, welche der Bahnkurve der Translationseinrichtung (9) in diesem Bereich entspricht. Hierdurch wird ein Momenteneinfluß des Krafterzeugers (7) auf den Hebel (1) im Bereich x < $x_T$ vermieden.

Als Alternative zu dem Kurvenstück (123) kann in dem Bereich x > $x_T$ eine Kontur gemäß Kurvenstück (124) angewandt werden. Diese hat im Vergleich zu dem Kurvenstück (123) einen zunächst steileren Abfall der Kontur bei insgesamt verringerter konvexer Wölbung zum Gegenstand. Eine Kontur gemäß Kurvenstück (124) ist vorteilhaft bei einer Zuspanneinrichtung einsetzbar, bei der im Bereich geringer Bremswirkungen, z. B. bei Teilbremsungen ein besonders schnelles Zuspannen und auch Lösen der Bremse erwünscht ist, z. B. bei Pkw-Bremsanlagen.

Alle in der Fig. 19 dargestellten aus den Kurvenstücken (122, 123, 124, 125) zusammensetzbaren Konturverläufe sind je nach Anwendungsfall nach Auswahl des Fachmanns vorteilhaft einsetzbar.

In der Fig. 20 sind die den in der Fig. 19 dargestellten Kurvenstücken entsprechenden Kurvenstücke in der Darstellung ($\alpha = f_{Kontur}(\Omega)$) angegeben. Hierbei korreliert Kurvenstück (126) mit Kurvenstück (122), (127) mit (123), (128) mit (125) und (129) mit (124).

Aus der Fig. 20 ist einerseits erkennbar, daß der Hebelwinkel ($\Omega$) auf den Wert ($\Omega_{max}$) begrenzt ist. Bei diesem Wert stellt sich dann ein Einwirkwinkel $\alpha = \alpha_{max}$ ein. Das Kurvenstück (128) verläuft dabei im wesentlichen auf der Nullinie der Abszissenachse.

Es versteht sich, daß statt der Elektromotoren (74, 90) auch jede andere Art von Aktuatoren eingesetzt werden kann, sowohl elektrischer als auch hydraulischer oder pneumatischer Art.

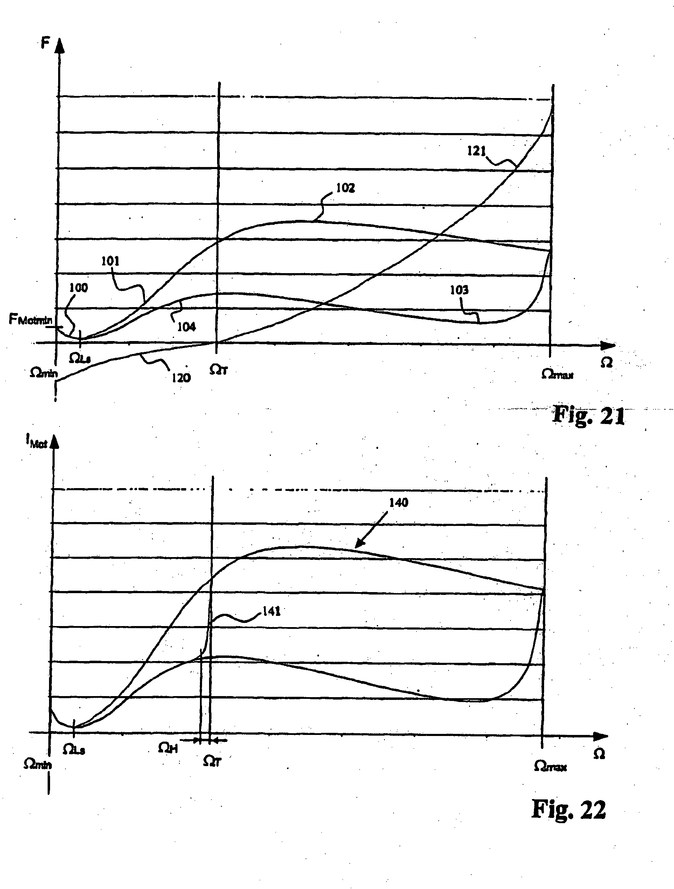

In der Fig. 21 ist beispielhaft der anhand der Fig. 17 bereits in der Darstellung als Drehmoment ($M_M$) erläuterte Verlauf (100, 101, 102, 103, 104) des von dem Elektromotor (74) in die Zuspanneinrichtung eingespeisten ersten Zuspannkraft-Anteils ($F_{Mot}$) dargestellt. Weiterhin ist in der Fig. 21 beispielhaft der anhand der Fig. 18 bereits in der Darstellung als Drehmoment ($M_F$) erläuterte Verlauf (120, 121) des von dem Krafterzeuger (7) abgegebenen unterstützenden Zuspannkraft-Anteils ($F_{Fe}$) über den Hebelwinkel ($\Omega$) dargestellt. Die zwischen dem Zuspannen und dem Lösen der Bremse auftretende Hysterese, welche zum vorwiegenden Teil aus der bekannten Bremsenhysterese resultiert, ist in der Darstellung gemäß Fig. 21 in der Kraftverlaufskurve (100, 101, 102, 103, 104) für den ersten Zuspannkraft-Anteil ($F_{Mot}$) zusammengefaßt, d. h. auch alle übrigen Hystereseanteile, z. B. von dem Krafterzeuger, sind zur Vereinfachung der Darstellung in dieser einen Kurve zusammengefaßt.

Ausgehend von der Fahrtstellung ($\Omega = \Omega_{min}$) des Hebels (1) wird dieser mit einer Anfangskraft beaufschlagt, in dessen Folge er eine Bewegung in Zuspannrichtung ausführt. Hierbei, d. h. bis zum Erreichen des Anlegepunkts des Stempels (31) an den Bremsbelag (40, 41) bei $\Omega = \Omega_{LS}$, ist der erste Zuspannkraft-Anteil ($F_{Mot}$) relativ gering. In diesem Bereich ist der abflachende Bereich der Kontur (10) bis zu deren Totpunkt zu überwinden, wobei der Krafterzeuger (7) eine Gegenkraft ($F_{Fe}$) zu dem von dem Elektromotor (74) abgegebenen ersten Zuspannkraft-Anteil ($F_{Mot}$) bewirkt. Diese Gegenkraft gemäß Kurvenstück (120) nimmt mit zunehmendem Winkel ($\Omega$) ab.

Ausgehend von dem Anfangswert ($F_{Motmin}$) nimmt der erste Zuspannkraft-Anteil ($F_{Mot}$) gemäß Kurvenstück (100) zunächst leicht ab, um dann in dem Kurvenstück (101) einen steilen Anstieg zu erfahren, welcher sich bei Erreichen und Überschreiten des Totpunktwinkels ($\Omega_T$) übergangslos in dem Kurvenstück (102) fortsetzt, um dann infolge zunehmender Unterstützungswirkung durch den Krafterzeuger (7) abzuflachen und leicht abzunehmen, bis der maximale Zuspannwinkel ($\Omega_{Max}$), der einer Vollbremsung entspricht, erreicht wird. In dem Winkelbereich oberhalb des Totpunktwinkels ($\Omega_T$) nimmt der unterstützende Zuspannkraft-Anteil ($F_{Fe}$) des Krafterzeugers (7) gemäß Kurvenstück (121) zu, wobei der Verlauf des Kurvenstücks (121) gemäß einer angestrebten Auslegungskennlinie für die Zuspanneinrichtung ausgewählt ist. Die gesamte Zuspannkraft ergibt sich, wie bereits erwähnt, aus der Summe des ersten Zuspannkraft-Anteils und des unterstützenden Zuspannkraft-Anteils, was gemäß der Darstellung der Fig. 21 durch eine Addition der einzelnen Kurvenverläufe möglich ist.

Beginnend mit dem Kurvenstück (103) wird die Bremse wieder gelöst, d. h. in Richtung Fahrtstellung verstellt. Wie anhand der Fig, 21 am Kurvenstück (103) erkennbar ist, muß der erste Zuspannkraft-Anteil ($F_{Mot}$) zunächst eine Hysterese überwinden, bis der Hebel (1) eine Bewegung in nennenswertem Umfang ausführt. In einem sich daran anschließenden, relativ flach verlaufenden Kurvenstück, von dem erwünscht ist, daß es im Bereich kleiner Elektromotor-Kräfte wie z. B. dem Anfangswert ($F_{Motmin}$) liegt, wird dann eine Rückstellung des Hebels (1) bewirkt. Hierbei steigt der erste Zuspannkraft-Anteil ($F_{Mot}$) im Bereich des Totpunktwinkels ($\Omega_T$) wiederum an, um dann übergangslos in dem Kurvenstück (104) geringer zu werden und über den Kurvenstück (100) wiederum zu dem Anfangswert ($F_{Motmin}$) zurückzukehren.

In der Fig. 22 ist der zu dem anhand der Fig. 21 beschriebenen Zuspann- und Rückstellvorgang der Bremse analoge Verlauf des von dem Elektromotor (74) aufgenommenen Stroms ($I_{Mot}$) über den Hebelwinkel ($\Omega$) dargestellt. Der Strom ($I_{Mot}$) stellt hierbei keinen Augenblickswert dar, sondern wird durch eine geeignete zeitliche Mittelung bzw. eine Filterung aus dem zeitlichen Stromverlauf gewonnen.

Die Art der Filterung bzw. der Aufbereitung des Stromsignals hängt dabei von der Art des verwendeten Elektromotors ab. Bei einem einfachen Gleichstrom-Kollektormotor wird in der Regel keine aufwendige Filterung erforderlich sein, sondern es kann im wesentlichen der unmittelbar gemessene Stromwert für die Anwendung des erfindungsgemäßen Verfahren verwendet werden. Bei mit Wechselsignalen betriebenen Elektromotoren, wie z. B. Drehstrommotoren, geschalteten Reluktanzmotoren oder anderen nach dem Schrittmotorprinzip arbeitenden Motoren, wird in der Regel eine zeitliche Mittelwertbildung des Stromsignals und/oder eine Filterung erforderlich sein, um einen aussagefähigen Wert für den aufgenommenen Strom ($I_{Mot}$) zu erhalten.

Die in der Fig. 22 dargestellte Stromverlaufskurve (140) entspricht von ihrem prinzipiellen Verlauf her näherungsweise dem Verlauf des ersten Zuspannkraft-Anteils ($F_{Mot}$), so daß bei dem vorliegenden Ausführungsbeispiel näherungsweise von einer Proportionalität der Größen ($F_{Mot}$, $I_{Mot}$) ausgegangen werden kann. Bei der Stromverlaufskurve (140) liegt daher auch die bereits erläuterte Hysterese vor.

Die Stromverlaufskurve (140) stellt den Verlauf des Stroms ($I_{Mot}$) bei einer vollständigen Zuspannbewegung und einer anschließenden Rückstellbewegung der Bremse dar. Hierbei sind Massenträgheits-Einflüsse vernachlässigt worden. Bei einer geringeren Zuspannbewegung, z.B. bis zum Totpunktwinkel ($\Omega_T$), würde der Kurvenverlauf des aufgenommenen Stroms ($I_{Mot}$) dem Kurvenverlauf (140) bis zu dem Wert ($\Omega = \Omega_T$) entsprechen, wobei die Hysterese dann auch an diesem Umkehrpunkt ($\Omega = \Omega_T$) der Zuspannbewegung wirksam wäre, wie durch das Kurvenstück (141) dargestellt. Analoge Kurvenverläufe bzw. Kurvenstücke ergeben sich bei jedem anderen einstellbaren Wert des Hebelwinkels ($\Omega$). Wie aus der Fig. 22 außerdem erkennbar ist, führt eine Verringerung des Stroms ($I_{Mot}$) auch im Hysteresebereich bereits zu einer geringfügigen Veränderung ($\Omega_H$) des Hebelwinkels ($\Omega$) in Rückstellrichtung.

## Patentansprüche

1. Zuspanneinrichtung für eine Bremse zur Abgabe einer Ausgangskraft ($F_A$) auf Bremskraft erzeugende Mittel (40, 41, 42, 43, 50) in Abhängigkeit von einer Eingangsgröße ($F_E$), mit einem Hebel (1), der die Ausgangskraft ($F_A$) abgibt, und einem bezüglich der Längsachse des Hebels (1) in einem Einwirkwinkel ($\alpha$) eine Kraft ($F_{Feder}$) auf den Hebel (1) aufbringenden Krafterzeuger (7) in Form einer vorgespannten Feder, wobei die Eingangsgröße über eine Eingangsgrößen/Kraft-Umsetzeinrichtung (72, 73, 74) eine Eingangskraft ($F_E$) für die Zuspanneinrichtung erzeugt, welche bezüglich des von dem Krafterzeuger (7) auf den Hebel ausgeübten Kraftanteils ($F_F$) in Zuspannrichtung unterstützend wirkt, mit Mitteln (9, 10, 13, 70, 71) zur Veränderung des Einwirkwinkels ($\alpha$) in Abhängigkeit der Eingangsgröße ($F_E$) derart, dass die Ausgangskraft ($F_A$) mittels einer Einstellung des Einwirkwinkels ($\alpha$) auf einen gewünschten Wert einstellbar ist, wobei der Krafterzeuger (7) an einem Krafteinwirkpunkt (18) auf den Hebel einwirkt und einen veränderbaren Kraftübertragungspunkt (6) aufweist, durch dessen Änderungen der Einwirkwinkel ($\alpha$) veränderbar ist, **dadurch gekennzeichnet, dass** der Krafterzeuger (7) bei jedem einstellbaren Wert des Einwirkwinkels ($\alpha$) an demselben Krafteinwirkpunkt (18) auf den Hebel (1) einwirkt, wobei der veränderbare Kraftübertragungspunkt (6) entlang einer vorgegebenen Bahnkurve veränderbar ist, wobei die Bahnkurve als Kontur (10) ausgebildet ist, auf der eine mit dem Hebel (1), insbesondere an dem Kraftübertragungspunkt (6), verbundene Translationseinrichtung (9) entlang bewegbar ist.

2. Zuspanneinrichtung nach Anspruch 1, **dadurch gekennzeichnet dass** die Translationseinrichtung (9) ein Bestandteil der Mittel (9, 10, 13, 70, 71) zur Veränderung des Einwirkwinkels ($\alpha$) ist.

3. Zuspanneinrichtung nach einem der vorhergehenden Ansprüche, **dadurch gekennzeichnet, dass** der Hebel (1) in einem zulässigen Winkelbereich von einem vorgegebenen Minimalwert ($\Omega_{min}$), insbesondere dem Wert Null, bis zu einem vorgegebenen Maximalwert ($\Omega_{max}$) einstellbar ist.

4. Zuspanneinrichtung nach einem der vorhergehenden Ansprüche, **dadurch gekennzeichnet, dass** die Ausgangskraft ($F_A$) auf eine zumindest zum Teil elastische Kraftaufnahmeeinrichtung (4, 5) einwirkt, welche infolge der Krafteinwirkung der Ausgangskraft ($F_A$) eine Gegenkraft ($F_G$) erzeugt.

5. Zuspanneinrichtung nach einem der vorhergehenden Ansprüche, **dadurch gekennzeichnet, dass** die Eingangsgrößen/Kraft-Umsetzeinrichtung (72, 73, 74) über eine Einrichtung (70, 71) zur Veränderung der Winkellage ($\Omega$) des Hebels auf den Hebel (1) einwirkt.

6. Zuspanneinrichtung nach Anspruch 5, **dadurch gekennzeichnet, dass** die Einrichtung (70, 71) zur Veränderung der Winkellage ($\Omega$) des Hebels ein Bestandteil der Mittel (9, 10, 13, 70, 71) zur Veränderung des Einwirkwinkels ($\alpha$) ist.

7. Zuspanneinrichtung nach einem der vorhergehenden Ansprüche, **dadurch gekennzeichnet, dass** die Eingangsgrößen/Kraft-Umsetzeinrichtung (72, 73, 74) ortsfest bezüglich der Kraftaufnahmeeinrichtung (4, 5) angeordnet ist.

8. Zuspanneinrichtung nach einem der Ansprüche 4 bis 7, **dadurch gekennzeichnet, dass** in Ausfahrrichtung des Hebels (1) gegen die Kraftaufnahmeeinrichtung (4, 5) der Krafterzeuger (7) unterstützend wirkt, hingegen in Einfahrrichtung die Gegenkraft ($F_G$) wiederum unterstützend zur Rückstellung des Krafterzeugers (7) wirkt.

9. Zuspanneinrichtung nach einem der vorhergehenden Ansprüche, **dadurch gekennzeichnet, dass** wenigstens näherungsweise ein Energiegleichgewicht aus den durch die Größen Eingangskraft ($F_E$), den Hebel (1) ausgeübter Kraftanteils ($F_F$) des Krafterzeugers und Gegenkraft ($F_G$) erzeugten Energieanteilen hergestellt wird.

10. Zuspanneinrichtung nach einem der vorhergehenden Ansprüche, **dadurch gekennzeichnet, dass** die Kraftaufnahmeeinrichtung (4, 5) Bestandteil einer Fahrzeugbremse ist.

11. Zuspanneinrichtung nach einem der vorhergehenden Ansprüche, **dadurch gekennzeichnet, dass** wenigstens an einem Ende des zulässigen Winkelbereichs ($\Omega_{min}$) ein mechanischer Anschlag vorgesehen ist, durch den eine definierte Endposition der Zuspanneinrichtung festgelegt ist.

12. Zuspanneinrichtung nach einem der vorhergehenden Ansprüche, **dadurch gekennzeichnet, dass** der Hebel (1) bei Ausfall der Eingangsgröße und/oder der Eingangskraft ($F_E$) in eine definierte Winkelposition bewegbar ist.

13. Zuspanneinrichtung nach einem der vorhergehenden Ansprüche, **dadurch gekennzeichnet, dass** der Hebel (1) mittels des von dem Krafterzeuger (7) darauf ausgeübten Kraftanteils ($F_F$) auch ohne Wirkung der Eingangskraft ($F_E$) in eine definierte Endposition bewegbar ist.

14. Zuspanneinrichtung nach Anspruch 13, **dadurch gekennzeichnet, dass** die Endposition einem Ende des zulässigen Winkelbereichs, insbesondere dem Minimalwert ($\Omega_{min}$), entspricht.

15. Zuspanneinrichtung nach einem der vorhergehenden Ansprüche, **dadurch gekennzeichnet, dass** ein Lüftspiel-Aktuator (90, 91, 92, 93, 94, 95, 96, 97) zur steuerbaren Veränderung des Lüftspiels ($\Omega$Ls) der Bremse vorgesehen ist.

**Claims**

1. Actuating device for a brake for delivering an output force ($F_A$) to brake force-generating means (40, 41, 42, 43, 50) as a function of an input variable ($F_E$), comprising a lever (1), which delivers the output force ($F_A$), and a force generator (7) in the form of a biased spring applying a force ($F_{spring}$) to the lever (1) at an effective angle ($\alpha$) relative to the longitudinal axis of the lever (1), the input variable, by way of an input variable/force translation device (72, 73, 74), generating an input force ($F_E$) for the actuating device, which acts in support of the force component ($F_F$) exerted on the lever by the force generator (7) in the actuating direction, with means (9, 10, 13, 70, 71) for varying the effective angle ($\alpha$) as a function of the input variable ($F_E$), in such a way that the output force ($F_A$) can be adjusted to a desired value by means of an adjustment of the effective angle ($\alpha$), the force generator (7) acting on the lever at a force exertion point (18) and having a variable force transmission point (6), variations of which serve to vary

the effective angle ($\alpha$), **characterized in that** the force generator (7) acts on the lever (1) at the same force exertion point (18) for any adjustable value of the effective angle ($\alpha$), the variable force transmission point (6) being variable along a predefined path curve, the path curve being formed as a contour (10), along which a translation device (9) connected to the lever (1), in particular at the force transmission point (6), is capable of moving.

2. Actuating device according to Claim 1, **characterized in that** the translation device (9) is an integral part of the means (9, 10, 13, 70, 71) for varying the effective angle ($\alpha$).

3. Actuating device according to either of the preceding claims, **characterized in that** the lever (1) is adjustable in an admissible angular range from a predefined minimum value ($\Omega_{min}$), in particular the value zero, to a predefined maximum value ($\Omega_{max}$).

4. Actuating device according to one of the preceding claims, **characterized in that** the output force ($F_A$) acts on an at least partially elastic force absorbing device (4, 5), which in response to the force exerted by the output force ($F_A$) generates a counterforce ($F_G$).

5. Actuating device according to one of the preceding claims, **characterized in that** the input variable/force translation device (72, 73, 74) acts on the lever (1) by way of a device (70, 71) for varying the angular position ($\Omega$) of the lever.

6. Actuating device according to Claim 5, **characterized in that** the device (70, 71) for varying the angular position ($\Omega$) of the lever is an integral part of the means (9, 10, 13, 70, 71) for varying the effective angle ($\alpha$).

7. Actuating device according to one of the preceding claims, **characterized in that** the input variable/force translation device (72, 73, 74) is fixedly arranged in relation to the force absorbing device (4, 5).

8. Actuating device according to one of Claims 4 to 7, **characterized in that** in the extending direction of the lever (1) towards the force absorbing device (4, 5) the force generator (7) acts in support, whereas in the retracting direction the counterforce ($F_G$) in turn acts to assist the restoration of the force generator (7).

9. Actuating device according to one of the preceding claims, **characterized in that** an energy equilibrium is established, at least approximately, from the energy components generated by the variables: input force ($F_E$), force component ($F_F$) of the force generator exerted on the lever (1) and counterforce ($F_G$).

10. Actuating device according to one of the preceding claims, **characterized in that** the force absorbing device (4, 5) is an integral part of a vehicle brake.

11. Actuating device according to one of the preceding claims, **characterized in that** a mechanical stop, which serves for fixing a defined limit position of the actuating device, is provided at least at one end of the admissible angular range ($\Omega_{min}$).

12. Actuating device according to one of the preceding claims, **characterized in that** the lever (1) can be moved into a defined angular position in the absence of the input variable and/or the input force ($F_E$).

13. Actuating device according to one of the preceding claims, **characterized in that** even in the absence of the input force ($F_E$), the lever (1) can be moved into a defined limit position by means of the force component ($F_F$) exerted on it by the force generator (7).

14. Actuating device according to Claim 13, **characterized in that** the limit position corresponds to one end of the admissible angular range, in particular the minimum value ($\Omega_{min}$).

15. Actuating device according to one of the preceding claims, **characterized in that** a lift clearance actuator (90, 91, 92, 93, 94, 95, 96, 97) is provided for controllable variation of the lift clearance ($\Omega_{Ls}$) of the brake.

**Revendications**

1. Dispositif de serrage pour un frein, prévu pour fournir une force de sortie ($F_A$) à des moyens générant une force de freinage (40, 41, 42, 43, 50) en fonction d'une valeur d'entrée ($F_E$), comprenant un levier (1), qui fournit la force de sortie ($F_A$), et un générateur de force (7) sous forme d'un ressort précontraint, appliquant, par rapport à l'axe longitudinal du levier (1) suivant un angle d'application ($\alpha$), une force ($F_{Feder}$) au levier (1), la valeur d'entrée, par le biais d'un dispositif de conversion valeur d'entrée / force (72, 73, 74), produisant une force d'entrée ($F_E$) pour le dispositif de serrage, qui agit de manière favorisante dans la direction de serrage par rapport à la proportion de force ($F_F$) exercée sur le levier par le générateur de force (7), des moyens (9, 10, 13, 70, 71) pour faire varier l'angle d'application ($\alpha$) en fonction de la valeur d'entrée ($F_E$), de telle sorte que la force de sortie ($F_A$) puisse être ajustée à une valeur souhaitée au moyen d'un ajustement de l'angle d'application ($\alpha$), le générateur de force (7) agissant sur le levier au niveau d'un point d'application de force (18) et présentant un point de transfert de force variable (6) dont les variations permettent de faire varier l'angle d'application ($\alpha$), **caractérisé en ce que** le générateur de force (7), pour chaque valeur ajustable de l'angle d'application ($\alpha$), agit sur le levier (1) au même point d'application de force (18), le point de transfert de force variable (6) pouvant varier le long d'une courbe de trajectoire prédéfinie, la courbe de trajectoire étant réalisée sous forme de contour (10) le long duquel peut se déplacer un dispositif de translation (9) connecté au levier (1), notamment au point de transfert de force variable (6).

2. Dispositif de serrage selon la revendication 1, **caractérisé en ce que** le dispositif de translation (9) est un constituant des moyens (9, 10, 13, 70, 71) pour faire varier l'angle d'application ($\alpha$).

3. Dispositif de serrage selon l'une quelconque des revendications précédentes, **caractérisé en ce que** le levier (1) peut être ajusté dans une région angulaire admissible d'une valeur minimale prédéfinie ($\Omega_{min}$), en particulier la valeur zéro, à une valeur maximale prédéfinie ($\Omega_{max}$).

4. Dispositif de serrage selon l'une quelconque des revendications précédentes, **caractérisé en ce que** la force de sortie ($F_A$) agit sur un dispositif de réception de force (4, 5) au moins en partie élastique, qui produit, du fait de l'action de la force de sortie ($F_A$), une force conjuguée ($F_G$).

5. Dispositif de serrage selon l'une quelconque des revendications précédentes, **caractérisé en ce que** le dispositif de conversion valeur d'entrée / force (72, 73, 74) agit sur le levier (1) par le biais d'un dispositif (70, 71) pour faire varier la position angulaire (Q) du levier.

6. Dispositif de serrage selon la revendication 5, **caractérisé en ce que** le dispositif (70, 71) pour faire varier la position angulaire (Q) du levier est un constituant des moyens (9, 10, 13, 70, 71) pour faire varier l'angle d'application ($\alpha$).

7. Dispositif de serrage selon l'une quelconque des revendications précédentes, **caractérisé en ce que** le dispositif de conversion valeur d'entrée / force (72, 73, 74) est disposé fixement par rapport au dispositif de réception de force (4, 5).

8. Dispositif de serrage selon l'une quelconque des revendications 4 à 7, **caractérisé en ce que** le générateur de force (7) agit de manière favorisante dans la direction de sortie du levier (1) à l'encontre du dispositif de réception de force (4, 5), mais, dans la direction de rentrée, agit à nouveau de manière favorisant la force conjuguée ($F_G$) pour ramener le générateur de force (7).

9. Dispositif de serrage selon l'une quelconque des revendications précédentes, **caractérisé en ce qu'**un équilibre énergétique est au moins approximativement établi entre les proportions énergétiques produites par les valeurs force d'entrée ($F_E$), proportion de force ($F_F$) exercée sur le levier (1) du générateur de force et force conjuguée ($F_G$).

10. Dispositif de serrage selon l'une quelconque des revendications précédentes, **caractérisé en ce que** le dispositif de réception de force (4, 5) fait partie d'un frein de véhicule.

11. Dispositif de serrage selon l'une quelconque des revendications précédentes, **caractérisé en ce qu'**au moins à une extrémité de la plage angulaire admissible ($\Omega_{min}$) est prévue une butée mécanique, qui fixe une position de fin de course définie du dispositif de serrage.

12. Dispositif de serrage selon l'une quelconque des revendications précédentes, **caractérisé en ce que** le levier (1) peut être déplacé dans une position angulaire définie en l'absence de la valeur d'entrée et/ou de la force d'entrée ($F_E$).

13. Dispositif de serrage selon l'une quelconque des revendications précédentes, **caractérisé en ce que** le levier (1) peut être déplacé dans une position de fin de course définie au moyen de la proportion de force ($F_F$) exercée par le générateur de force sur celui-ci, également sans application de la force d'entrée ($F_E$).

**14.** Dispositif de serrage selon la revendication 13, **caractérisé en ce que** la position de fin de course correspond à une extrémité de la plage angulaire admissible, en particulier à la valeur minimale ($\Omega_{min}$).

**15.** Dispositif de serrage selon l'une quelconque des revendications précédentes, **caractérisé en ce qu'**un actionneur de jeu (90, 91, 92, 93, 94, 95, 96, 97) est prévu pour faire varier de manière commandable le jeu ($\Omega_{LS}$) du frein.

Fig. 1

Fig. 2

Fig. 3

Fig. 4

Fig. 5

Fig. 6

Fig. 7

Fig. 8

Fig. 9

18

**Fig. 10**

Fig. 11

**Fig. 12**

Fig. 13

EP 1 421 293 B2

Fig. 14

Fig. 15

EP 1 421 293 B2

Fig. 16

**Fig. 17**

**Fig. 18**

Fig. 19

Fig. 20

**Fig. 21**

**Fig. 22**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0144677 A1